# EUROPEAN PATENT APPLICATION

(11) **EP 4 681 888 A1**
(43) Date of publication of application: **21.01.2026**
(21) Application number: 25188876.4
(22) Date of filing: 10.07.2025
(51) Int. Cl.: B25J 9/00

(54) **EXOSUIT**

(30) Priority: 19.07.2024 US 202418777882; 19.07.2024 US 202418777888; 19.07.2024 US 202418778161
(71) Applicant: Amer Sports Canada Inc., North Vancouver, British Columbia V7H 1A8 (CA); Skip Innovations Inc., San Francisco, CA 94107 (US)
(72) Inventor: Stuart, Cameron, Garibaldi Heights, V0N 1T0 (CA); Spittal, Dana, North Vancouver, V7J 0B5 (CA); Babcock, Timothy, North Vancouver, V7M 1S2 (CA); Mah, Jason, Vancouver, V5T 0H6 (CA); Lamers, Erik, San Francisco, 94121 (US); Metzger, Andrew, Berkeley, 94708 (US); Roumiantseva, Anna, San Francisco, 94131 (US); Zealand, Kathryn, Stanford, 94305 (US); Tachibana, Daniel, San Francisco, 94122 (US)
(74) Representative: Lapierre, Stéphane

(57) **Abstract**

An exosuit leg gripping system comprising:
an upper leg grip configured to encircle a thigh of a person wearing the exosuit leg gripping system;
a lower leg grip configured to encircle a shank of a person wearing the exosuit leg gripping system.

The exosuit leg gripping system comprises an upper leg grip connection interface carried by the upper leg grip, the upper leg grip connection interface configured to releasably connect the upper leg grip to a thigh link of an exosuit drive system;

The exosuit leg gripping system comprises a lower leg grip connection interface carried by the lower leg grip, a shank link connection interface configured to releasably connect the lower leg grip to a shank link of an exosuit drive system.

## Description

### BACKGROUND

Exosuits are also sometimes referred to as powered exoskeletons, exo-frames, robot suits, hard suits and the like. Exosuits are mobile machines that are wearable over all or part of the human body to provide augmented mobility and ergonomic structural support.

### BRIEF DESCRIPTION OF THE DRAWINGS

Figure 1 is a front view schematically illustrating portions of an example exosuit.
Figure 2 is a side view of the example exosuit of Figure 1.
Figure 3 is a front view illustrating portions of an example exosuit.
Figure 4 is a side view of the example exosuit of Figure 3.
Figure 5 is a side view illustrating example leg grips of the constriction adjuster of Figure 3, the leg grips having a first internal leg receiving sizes.
Figure 6 is a side view illustrating the example leg grips of Figure 5 with the leg grips having second smaller internal leg receiving sizes.
Figure 7 is a top view illustrating portions of one example of the leg grips of Figure 5.
Figure 8 is a top view illustrating the example the leg grips shown in Figure 7 with the second smaller internal leg receiving sizes shown in Figure 6.
Figure 9 is a top view illustrating portions of one example of the leg grips of Figure 5.
Figure 10 is a top view illustrating the example the leg grips shown in Figure 9 with the second smaller internal leg receiving sizes shown in Figure 6.
Figure 11 is a sectional view illustrating portions of an example exosuit having a leg grip having a first internal leg receiving diameter.
Figure 12 is a sectional view illustrating portions of the example exosuit of Figure 11 with the leg grip having a second smaller internal leg receiving diameter.
Figure 13 is a sectional view of one example of the exosuit of Figures 11 and 12.
Figure 14 is a sectional view of another example of the exosuit of Figures 11 and 12.
Figure 15 is a sectional view illustrating portions of an example of the exosuit of Figure 11 and 12.
Figure 16 is a sectional view illustrating portions of an example of the exosuit of Figure 11 and 12.
Figure 17 is a front perspective view illustrating portions of an example exosuit.
Figure 18 is a side perspective view illustrating portions of the example exosuit of Figure 17.
Figure 19A is a side perspective view illustrating portions of an example exosuit having a garment with apertures and openings in uncovered states.
Figure 19B is a side perspective view illustrating portions of the example exosuit of Figure 19A with the apertures and openings in covered states.
Figure 19C is a sectional view illustrating portions of the example exosuit of Figure 19B.
Figure 19D is a side of an example exosuit having a garment with apertures and openings in uncovered states.
Figure 19E is a side perspective view illustrating portions of the example exosuit of Figure 19D with the apertures and openings in covered states.
Figure 19F is a side perspective view illustrating portions of an example exosuit with apertures and openings in covered states.
Figure 20 is a fragmentary perspective view illustrating an exterior of the example exosuit of Figure 18 without an attached example motion assist lateral.
Figure 21 is a fragmentary perspective view illustrating portions of a garment of the exosuit of Figure 17 rolled up to illustrate portions of an example leg grip carrier and tether.
Figure 22 is a perspective view illustrating portions of an example leg grip, lower leg grip that ankle grip of the example exosuit of Figure 17.
Figure 23 is a perspective view illustrating portions of the example exosuit of Figure 17.
Figure 24 is a perspective view illustrating portions of an example upper leg grip.
Figure 25A is a perspective view illustrating portions of the example upper leg grip of Figure 24.
Figure 25B is a perspective view illustrating portions of the example upper leg grip of Figure 25A.
Figure 26 is a perspective view illustrating portions of the example upper leg grip of Figure 25A.
Figure 27A is a sectional view of the portions of the upper leg grip of Figure 26 taken along line 27A-27A.
Figure 27B is an exploded perspective view illustrating portions of the example leg grip of Figure 26.
Figure 28 is a perspective view illustrating portions of an example inner cushion of the example upper leg grip of Figure 26.
Figure 29 is a perspective view illustrating portions of the example inner cushion of Figure 28.
Figure 30 is a sectional view of the example inner cushion of Figure 28 taken along line 30-30.
Figure 31 is a perspective view illustrating portions of the example inner cushion of Figure 28.
Figure 32 is a perspective view illustrating portions of an example lower leg grip unit.
Figure 33 is a perspective view illustrating portions of the example lower leg grip unit of Figure 32.
Figure 34 is a fragmentary perspective view illustrating portions of the example lower leg grip unit of Figure 32.
Figure 35A is a partially exploded perspective view illustrating portions of the example lower leg grip unit of Figure 32.
Figure 35B is an exploded perspective view illustrating portions of the example lower leg grip unit of Figure 32.
Figure 36 is a perspective view illustrating an example strap of an example ankle grip of the example lower leg grip unit of Figure 32.
Figure 37 is a fragmentary perspective view illustrating portions of the example lower leg grip unit of Figure 32.
Figure 38 is a perspective view illustrating portions of an example inner cushion of the example lower leg grip unit of Figure 32.
Figure 39 is a perspective view illustrating portions of the example inner cushion of the example lower leg grip unit of Figure 32.
Figure 40 is a perspective view illustrating portions of an example ankle grip of the example lower leg grip unit of Figure 32.
Figure 41 is a fragmentary perspective view illustrating a portion of the ankle grip of the lower leg grip unit of Figure 32.
Figure 42 is a top perspective view illustrating portions of the ankle grip of the lower leg grip unit of Figure 32 having a first internal diameter.
Figure 43 is a top perspective view illustrating portions of the ankle grip of the lower leg grip unit of Figure 32 having a second smaller internal diameter.
Figure 44 is a top perspective view illustrating a portion of an inner cushion of the ankle grip of the lower leg grip unit of Figure 32.
Figure 45 is a fragmentary perspective view illustrating a portion of an example connection interface of an example motion assist lateral for connection to an upper leg grip.
Figure 46 is a fragmentary perspective view illustrating the example connection interface of Figure 45 engaging a connection interface of an example upper leg grip.
Figure 47 is a sectional view illustrating the example connection interface of Figure 45 engaging an example connection interface of the example upper leg grip.
Figure 48 is a perspective view illustrating connection of an example connection interface of the lower leg grip in engagement with an example connection interface of an example motion assist lateral.
Figure 49 is a perspective view of a lower portion of the example motion assist lateral.
Figure 50 is a fragmentary perspective view illustrating an example connection interface of the example motion assist lateral of Figure 48.
Figure 51 is a fragmentary perspective view illustrating connection of the example connection interface of the lower leg grip engaged with the example connection interface of the motion assist lateral.
Figure 52 is a sectional view illustrating the example connection interface of the motion assist lateral and the example connection interfaces of the lower leg grip during interlocking.
Figure 53 is a sectional view illustrating the example connection interface of the motion assist lateral and the example connection interfaces of the lower leg grip when interlocked.
Figure 54 is a sectional view illustrating the example connection interface of the motion assist lateral and the example connection interfaces of the lower leg grip during release of the example motion assist lateral from the example connection interface of the lower leg grip.
Figure 55 is a perspective view illustrating portions of an example exosuit.
Figure 56 is a perspective view illustrating portions of an example exosuit.
Figure 57 is a front perspective view illustrating portions of and example exosuit.
Figure 58 is a rear perspective view illustrating portions of the example exosuit of Figure 57.
Figure 59 is a side perspective view illustrating the example exosuit of Figure 57.
Figure 60 is an enlarged fragmentary side view of an example upper leg grip of the example exosuit of Figure 57.
Figure 61 is an enlarged fragmentary side view of an example lower leg grip of the example exosuit of Figure 57.
Figure 62 is a force diagram illustrating an example application of forces by an example motion assist lateral to legs of a person during a stepping up action.
Figure 63 is a force diagram illustrating an example application of forces by an example motion assist lateral to legs of a person during a stepping down action.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

Disclosed are example exosuits for being worn by a person to provide augmented or powered movement or mobility to the person's leg or legs. The example exosuits utilize an electrically powered actuator, such as a motor or pump, to assist in raising and lowering the person's thighs and shanks (lower legs). The example exosuits may be used for various applications including outdoor activities, sports activities, hiking, climbing, walking, running, skiing, other civilian applications, physical therapy activities, physical recovery activities, other medical applications and industrial applications.

The example exosuits may comprise an exosuit garment, upper and lower leg grips, and at least one motion assist lateral (MAL) structure. The garment is configured to be worn by the person and may be in the form of a pair of pants (the term "pants" encompasses shorts). The garment may comprise a waist opening and a pair of leg openings. The garment may be formed from sheets or panels of flexible material such as fabrics, polymers or the like, wherein the sheets or panels are cut and stitched, fused and/or bonded together to form the pants. In some implementations, the material forming the sheets or panels is breathable or air permeable. In some implementations, the material forming the sheets or panels is inflexible. In some implementations, the material is elastic or stretchable. In some implementations, the pants may be formed from several sheets or layers stitched, bonded or fused together to form the pants, wherein the different layers have different material properties.

The pants may include an inseam. The pants may include pockets. In some implementations, the pants may include a zippered fly. The size and length of the pants may vary. In other implementations, the pants may be shorts.

The garment may be configured to conceal or cover at least one of the leg grips. The example garments are further configured to facilitate connection of an internal leg grip and an external MAL. In some implementations, the example exosuit garments assist in supporting the at least one leg grip as the person positions his or her legs into connection with the leg grip. In some implementations, the example exosuit garments are connected to the least one leg grip by at least one flexible tether. The flexible tether permits the size and/or location of the leg grip relative to the garment to be adjusted while maintaining the fit and external appearance of the garment.

In some implementations, the example exosuit garments are releasably connected to the at least one leg grip, facilitating use of the leg grip with different garments and facilitating laundering of such garments separate from the leg grip. In some implementations, at least one of the leg grips may be adjusted or differently constricted to accommodate different leg dimensions. In such implementations, the example exosuit garments may include openings, flaps or slits to provide access to portions of the leg grips within the garment to facilitate manual adjustment of the leg grips.

The example leg grips facilitate connection of the MAL to the person's leg. The example exosuits may include an upper leg grip for connection of the MAL to the thigh of a person and a lower leg grip for connection of the MAL to the shank of the person. In some implementations, the example exosuits may additionally include an ankle grip. In some implementations, an ankle grip is connected to the shank grip. In some implementations, ankle grip is fixed to the shank grip. In some implementations, the upper leg grip is in the form of a thigh cuff configured to completely surround the thigh of the person wearing the exosuit. In some implementations, the lower leg grip is in the form of a shank cuff forming an uninterrupted loop configured to completely surround the shank or lower leg of the person wearing the exosuit, wherein the person's leg must be passed through the center of the loop. In some implementations, upper leg grip and/or the lower leg grip may be in the form of an interrupted or broken loop having a C or U shape, permitting the person to insert portions of his or her leg into the grip in a sideways or lateral fashion, perpendicular to the centerline of the broken loop. In implementations where an ankle grip is provided, ankle grip may be in the form of a broken loop, permitting the person to insert portions of his or leg into the ankle grip in a sideways or lateral fashion, perpendicular to the centerline of the broken loop. In those implementations where the upper leg grip, lower leg grip or the ankle grip are in the form of a broken loop, the opposite ends of the broken loop may be releasably connected to one another by strap, hook, fastener or other connection mechanism.

In some implementations, the upper leg grip, lower leg grip and/or the ankle grip (when provided) may have an adjustable internal diameter or adjustable leg opening to accommodate different leg dimensions. In some implementations, one or more of the leg grips may comprise end portions that overlap one another to form the uninterrupted loop and a retainer to selectively adjust and retain different overlapping extents of the end portions to provide the individual leg grip with a different internal leg opening size. In some implementations, the leg grips may include a strap having a rack or series of teeth and a pinion gear meshing with the series of teeth, wherein a knob, dial or other adjustment interface may be used to rotate the pinion gear to adjust the extent to which opposite ends of the strap overlap one another to adjust the size of the leg opening of the leg grip. In some implementations, the leg grips may include an inflatable sleeve or bladder extending completely about or partially about the leg, wherein the extent of inflation may be adjusted to vary the size of the leg opening of the leg grip.

In some implementations, the individual leg grips may be formed by a rigid, but flexible outer skeleton and a compressible or conformable inner cushion. The outer skeleton, sometimes referred to as the "hard cuff", serves as a backbone or spine for the leg grip, serving as a structural support for the leg grip while being sufficiently flexible to facilitate wrapping of the leg grip about the person's leg. The outer skeleton may include a housing for housing those components that facilitate adjustment of the size of the leg opening of the leg grip. The outer skeleton may likewise include connection interfaces for releasable connection of the leg grip to the MAL (through, or on top of the garment).

The inner cushion, sometimes referred to as the "soft cuff", provides cushioning or padding between the outer skeleton and the person's leg. The inner cushion may comprise one or more pads. The pads may be formed from a foam material (or combinations of foam materials), a bladder or other enclosures containing a gel or fluid (liquid or gas). In some implementations, the inner cushion is releasably connected to the outer skeleton to facilitate repair, replacement or cleaning/laundering of the inner cushion. For example, in some implementations, the inner cushion may be releasably connected to the outer skeleton by hook and loop fastener arrangement. In some implementations, the inner cushion is configured to accommodate the adjustment of the size of the leg opening of the leg grip. For example, the inner cushion may comprise a foam member having an accordion-like or baffle architecture. The according like architecture facilitates extension and retraction of the foam member. In such implementations, the foam member may be housed or encapsulated within an elastic outer casing or sleeve.

The example MALs extend along an exterior side of the garment and releasably connect to the leg grips through openings in the garment. The MALs are located along lateral sides of the person's legs, extending from above to below the knee. The example MALs provide powered motion or augmentation of the upper and lower leg of the person wearing the exosuit. The example MALs comprise a powered actuator, an upper link and a lower link. The powered actuator is configured to be positioned proximate to a person's knees and is configured to pivot the upper link and the lower link about an MAL axis proximate to the bending axis of the knee. In some implementations, the powered actuator may be in the form of an electric motor and a geared transmission. In some implementations, the powered actuator may be in the form of a pump which outputs pressurized fluid (a liquid or gas) for hydraulically/pneumatically pivoting the upper link and the lower link.

In some implementations, the powered actuator is powered by a battery carried by the garment. The garment may include a pocket adjacent or proximate to the waist opening, wherein the pocket includes a lower opening through which one or more electrical cords or cables pass. The garment may include a sleeve or other internal structures to retain the power cord along an interior of the garment, along the leg portions of the pants. The garment may include an opening proximate to the location of the powered actuator, wherein the power cord or cable may exit the garment for connection to a connection port or plug electrically connected to the powered actuator. Because the garment supports the power source for the powered actuator at a location along the waist opening of the garment, the mass of the battery need not be lifted when motion of the person's leg is being augmented. The mass of the battery may be more comfortably positioned along the back of the person wearing the garment and the exosuit, while also being less conspicuous and reducing strain on the back of the person wearing the exosuit. In other implementations, the power source or battery for the powered actuator may be at other locations.

The upper link is operably coupled to the powered actuator and has an end portion connected to the upper leg grip, through the garment. The lower link is operably coupled to the powered actuator and has an end portion connected to the lower leg grip, through the garment. As indicated above, in some implementations, the lower leg grip may be connected to an additional ankle grip such that pivotable movement of the lower leg grip about the MAL axis results in similar pivoting of the ankle grip.

The upper link comprises an upper link connection interface for connection to the upper leg grip while the lower link comprises a lower link connection interface for connection to the lower leg grip. In such implementations, the upper leg grip has an upper leg grip connection interface configured to releasably connect to the upper link connection interface and the lower leg grip has a lower leg grip connection interface for releasable connection to the lower link connection interface. In some implementations, the upper link connection interface and the upper leg grip connection interface are different than the lower link connection interface and the lower leg grip connection interface. In some implementations, the lower link connection interface and the lower leg grip connection interface are configured to facilitate connection using a sliding motion, movement of the lower leg grip and/or the lower link in directions along respective coincident or parallel axes that extend parallel to the major length of the lower leg link or parallel to the centerline of the leg opening of the lower leg grip. In contrast, the upper link connection interface and the upper leg grip connection interface are configured to facilitate connection using a lateral "pop" motion, movement of the upper leg grip and/or upper link in directions along coincident or parallel axes that extend perpendicular to the major length of the upper leg link or radially with respect to the centerline of the leg opening of the upper leg grip. As result, the person wearing the exosuit may more easily connect an individual MAL to his or her leg by first downwardly sliding the lower end of the lower leg link (along the leg) into connection with the lower leg grip followed by popping or pushing of the upper leg link inwards (inwards towards the leg) into connection with the upper leg grip. The person does not need to bend over as far to connect the lower link to the lower leg grip. Separation of the MAL from the leg grips may be done in an opposite fashion with the person first releasing or popping out and disconnecting the upper leg link from the upper leg grip followed by lifting or sliding the lower leg link in an upwards fashion to disconnect the lower leg link from the lower leg grip. In some implementations, such disconnection may involve depression of a lever or pushbutton to release a hook or latch of the connectors formed by the corresponding interfaces.

For purposes of this disclosure, the term "coupled" shall mean the joining of two members directly or indirectly to one another. Such joining may be stationary in nature or movable in nature. Such joining may be achieved with the two members, or the two members and any additional intermediate members being integrally formed as a single unitary body with one another or with the two members or the two members and any additional intermediate member being attached to one another. Such joining may be permanent in nature or alternatively may be removable or releasable in nature. The term "operably coupled" shall mean that two members are directly or indirectly joined such that motion may be transmitted from one member to the other member directly or via intermediate members.

For purposes of this disclosure, the phrase "configured to" denotes an actual state of configuration that fundamentally ties the stated function/use to the physical characteristics of the feature proceeding the phrase "configured to".

For purposes of this disclosure, the term "releasably" or "removably" with respect to an attachment or coupling of two structures means that the two structures may be repeatedly connected and disconnected to and from one another without material damage to either of the two structures or their functioning.

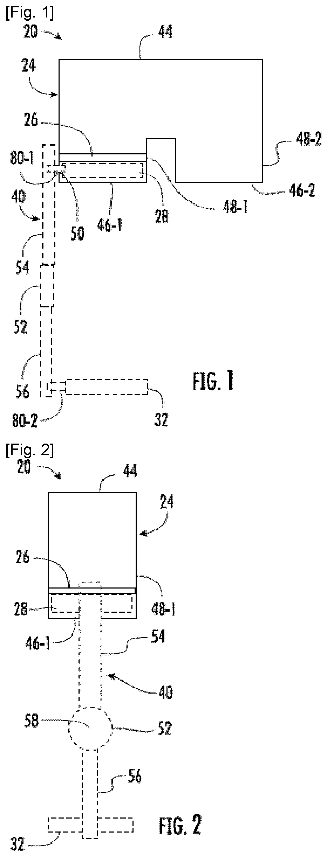

Figures 1 and 2 are diagrams schematically illustrating portions of an example exosuit 20. Exosuit 20 provides augmented or powered movement or mobility to the person's leg or legs. Exosuit 20 may use an electrically powered actuator, such as a motor or pump, to assist in raising and lowering the person's thighs and shanks. Exosuit 20 may be used for various applications including outdoor activities, sports activities, hiking, climbing, walking, running, skiing, other civilian applications, physical therapy activities, physical recovery activities, other medical applications and industrial applications. Exosuit 20 comprises exosuit garment 24, upper leg grip carrier 26, upper leg grip 28, lower leg grip 32 and MAL 40.

Exosuit garment 24 is shown in solid lines. Exosuit garment 24 comprises a pair of pants shown in the form of a pair of shorts. Exosuit garment 24 comprises one or more panels of fabric or other material forming a waist opening 44, leg openings 46-1, 46-2 and thigh portions 48-1, 48-2. In the example illustrated in which exosuit garment 24 is a pair of shorts, thigh portions 48 terminate at leg openings 46. As described hereafter, in other implementations, leg openings 46 may be located lower on the pants.

Thigh portions 48 extend below waist opening 44, generally below the cross/crutch point or crotch of garment 24. Thigh portion 48 comprise sleeves that receive the thighs of the person wearing garment 24. Thigh portions 48 are configured to additionally receive upper leg grip 28 which extends at least partially about the thigh of the person wearing garment 24. In the example illustrated in which exosuit 20 comprises a single upper leg grip 28 positioned within thigh portion 48-1, thigh portion 48-1 of garment 24 additionally comprises a link connection aperture 50 for connection of the upper leg grip 28 to MAL 40.

Upper leg grip carrier 26, schematically illustrated and sometimes referred to as a thigh cuff carrier, releasably connects upper leg grip 28 to garment 24 within garment 24. Upper leg grip carrier 26 facilitates separation and removal upper leg grip 28 from garment 24 to facilitate repair, replacement or laundry of garment 24 and repair, replacement or laundering of upper leg grip 28. In some implementations, upper leg grip carrier 26 comprises a zipper, wherein first portion or tape of the zipper is provided on carrier 26 and cooperates with a second portion or tape of the zipper, coupled to upper leg grip 28, to releasably connect garment 24 to the upper leg grip carrier 26. In some implementations, upper leg grip carrier 26 comprises one of hooks and loops of a hook and loop fastener arrangement which cooperate with the other of hooks and loops of the hook and loop fastener arrangement, coupled to the leg grip 28, to releasably connect garment 24 to the upper leg grip. 26. In some implementations, garment 24 and upper leg grip 28 have other cooperating connection mechanisms that facilitate releasable connection such as snaps, hooks, buttons and the like.

In some implementations, upper leg grip carrier 26 extends 360° about the centerline of thigh portion 48-1. In some implementations, upper leg grip carrier 26 comprises multiple individual connectors spaced from one another about the centerline of thigh portion 48-1. In some implementations, leg grip carrier 26 is located within thigh portion 48-1. In other implementations, upper leg grip carrier 26 may be located at a higher position, between the upper extent of thigh portion 48-1 and waist opening 44. In some implementations, upper leg grip carrier 26 does not releasably connect upper leg grip 28 to garment 24, but forms a more permanent fixed connection between upper leg grip 28 and garment 24.

In some implementations, upper leg grip carrier 26 further serves as a tether, comprising one or more cords, straps, bands, sheets or the like within thigh portion 48-1, wherein upper leg grip carrier 26 has a first end portion affixed to garment 24 and a second end portion connected to upper leg grip 28. Comprising or functioning as a tether, upper leg grip carrier 26 flexibly or movably suspends upper leg grip 28 from garment 24 within thigh portion 48-1. Said another way, upper leg grip carrier 26 permits relative movement of upper leg grip 28 with respect to thigh portion 48-1. Upper leg grip carrier 26 facilitates inwards spacing of upper leg grip 28 from the interior sides of thigh portion 48-1. As result, air flow passages are provided between the exterior of upper leg grip 28 in the interior of thigh portion 48-1. In addition, the side of the person wearing garment 24 is less constricted. In implementations where upper leg grip 28 is adjustable to provide various user selectable sizes or degrees of constriction, upper leg grip carrier 26 permits upper leg grip 28 to be constricted with less or without inward movement or constriction of thigh portion 48-1, while maintaining a normal or desirable outward appearance of thigh portion 48-1.

In some implementations, upper leg grip carrier 26 has a length, (extending from a point of connection with garment 24 to the point of connection with upper leg grip 28) of at least 0.5 inches and in some implementations, at least 1 inch. In other implementations, the length of the upper leg grip carrier 26 to the point of connection with the upper leg grip 28 can be at least 2 inches. As will be described hereafter, in some implementations, upper leg grip 28 may likewise be provided with a band, strap, cord or the like serving as an additional tether, wherein a first end portion of the additional tether is connected to the remainder of the upper leg grip 28 and a second end portion is releasably or fixedly connected to the upper leg grip carrier 26. In such implementations, the additional tether of the upper leg grip 28 may also have a length. In such implementations, the length of the upper leg grip carrier 26 and the length of the additional tether provided by upper leg grip 28 have a combined length of at least 1 inch and in some implementations, at least 2 inches to provide adjustability of upper leg grip 28 with little or no impact on thigh portion 48-1.

Upper leg grip 28 and lower leg grip 32 are each shown in broken lines to indicate that they may be separated from garment 24. Upper leg grip 28 and lower leg grip 32 are configured to connect the person's thigh and shank, respectively, to MAL 40. Upper leg grip 28 and lower leg grip 32 may include connection interfaces 80-1 and 80-2, respectively, which releasably correspond to connection interfaces provided on MAL 40. Upper leg grip 28 is in the form of a thigh cuff configured to completely surround the thigh of the person wearing the exosuit. Lower leg grip 32 is similar to upper leg grip 28 in that lower leg grip 32 may be in the form of a shank cuff configured to completely surround the shank or lower leg of a person wearing the exosuit. In some implementations, upper leg grip and/or the lower leg grip may be in the form of an interrupted or broken loop having a C or U shape, permitting the person to insert portions of his or her leg into the grip in a sideways or lateral fashion, perpendicular to the centerline of the broken loop.

MAL 40 is shown in broken lines to indicate that it is separable from upper leg grip 28 and lower leg grip 32 as well as garment 24. The example MAL 40 extends along an exterior side of the garment and releasably connects to the leg grips 28 and 32 through openings in the garment 24. The MAL 40 is located along a lateral side of the person's legs, extending from above to below the knee. The example MALs 40 provide powered motion or augmentation of the upper and lower leg of the person wearing the exosuit. The example MAL comprises a powered actuator 52, an upper link 54 and a lower link 56. The powered actuator 52 is configured to pivot the upper link 54 and the lower link 56 about a MAL axis 58 proximate to the bending axis of the knee. In some implementations, the powered actuator 52 may be in the form of an electric motor and a geared transmission. In some implementations, the powered actuator 52 may be in the form of a pump which outputs pressurized fluid (a liquid or gas) for hydraulically/pneumatically pivoting the upper link and the lower link.

Although exosuit 20 is illustrated as having a single leg grip 28, a single lower leg grip 32 and a single MAL 40 on the right side of garment 24, in other implementations, exosuit 20 may comprise an additional upper leg grip 28, an additional lower leg grip 32 and an additional MAL 40 on the left side of garment 24. In such implementations, similar to thigh portion 48-1, thigh portion 40-2 may likewise contain an upper leg grip carrier 26 and may comprise a link connection aperture accommodating connection between an internally received upper leg grip 28 and an external left MAL 40.

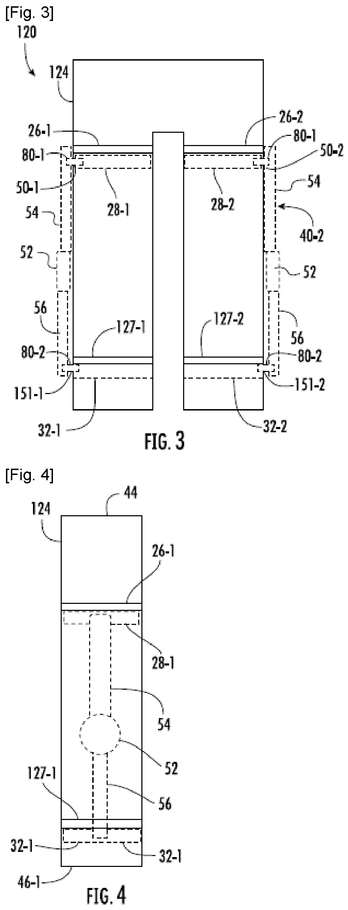

Figures 3 and 4 illustrate portions of an example exosuit 120. Exosuit 120 is similar to exosuit 20 except that exosuit 120 comprises exosuit garment 124, upper leg grip carriers 26-1, 26-2, lower leg grip carriers 127-1, 127-2, upper leg grips 28-1, 28-2, lower leg grips 32-1, 32-2, and MALs 40-1, 40-2. Exosuit garment 124 is similar garment 24 described above except that exosuit garment 124 comprises a pants that is configured to extend below the knees of the person wearing garment 124, receiving portions of the lower legs of the person wearing garment 124. Upper leg grip carriers 26-1 and 26-2 are each similar to upper leg grip carrier 26 described above. Lower leg grip carriers 127-1, 127-2 are similar to upper leg grip carriers 26-1 and 26-2 except that such carriers are connected to lower leg portions of garment 24 (located below the knees of the person wearing garment 124) and are configured to releasably support lower leg grips 32-1 and 32-2, respectively. Lower leg grip 32 is described above with respect to exosuit 20. MALs 40-1 and 40-2 are each similar to MAL 40 described above.

As with garment 24, garment 124 comprises link connection apertures 50-1 and 50-2 through which upper leg grips 28-1 and 28-2 are releasably connected to the upper links 54 of MALs 40-1 and 40-2, respectively. Because each of the leg portions of the pants of garment 124 also receives lower leg grips 32-132-2, garment 124 additionally comprises link connection apertures 151-1 and 151-2 through which lower leg grips 127-1 and 127-2 are releasably connected to lower links 56 of MALs 40-1 and 40-2, respectively.

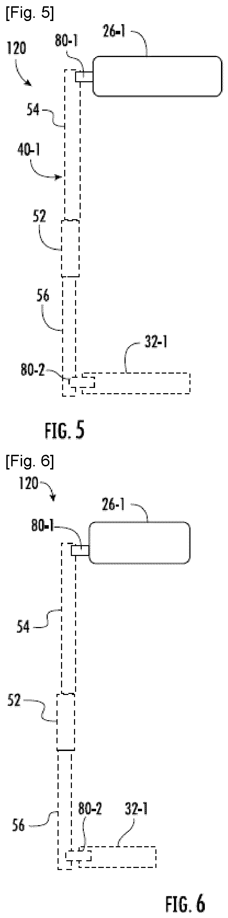

In some implementations, one or both of upper leg grips 26 (sometimes referred to as thigh cuffs) and lower leg grips 32 (sometimes referred to as shank cuffs) are adjustable to different sizes or degrees of constriction to accommodate different comfort levels or to accommodate different anatomically sized thighs and shanks, respectively. Figures 5 and 6 illustrate portions of the example exosuit 120 provided with selectively adjustable or constrictable upper leg grips and lower leg grips. Figure 5 illustrates upper leg grip 26-1 and lower leg grip 32-1 in larger expanded states. Figure 6 illustrates upper leg grip 26-1 and lower leg grip 32-1 in smaller constricted states.

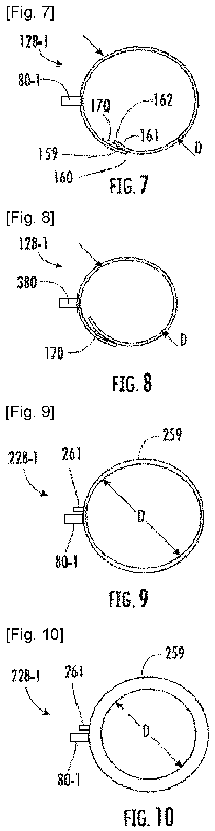

Figures 7 and 8 are sectional views illustrating portions of an example upper leg grip 128-1 in a larger state and a smaller constricted state, respectively. Upper leg grip 128-1 may be utilized in place of each of upper leg grips 26 of exosuit 20 or exosuit 120. Likewise, lower leg grips 32 may also have a configuration similar to that shown in Figures 7 and 8.

As shown by Figures 7 and 8, upper leg grip 128-1 has a first portion 159 having a first end 160 and a second portion 161 having second end 162 and overlapping the first portion 159. The internal diameter or internal dimensions D of upper leg grip 128-1 is adjustable by adjusting the degree to which portions 159 and 161 overlap one another and retaining the selected extent of overlap. In the example illustrated, upper leg grip 128-1 comprises a retainer 170 retaining portions 159 and 161 in one of multiple available overlapping states or extents. In one implementation, retainer 170 may comprise cooperating portions of a hook and loop fastener arrangement. In other implementations, retainer 170 may comprise cooperating buttons or knobs and slots or openings. In yet another implementation, retainer 170 may comprise a cooperating rack and pinion gear arrangement, wherein the pinion gear may be locked in place or is provided with sufficient frictional resistance to inhibit inadvertent rotation. In yet other implementations, retainer 170 may comprise a series of snaps or other retention mechanisms.

Figures 9 and 10 are sectional views illustrating portions of an example upper leg grip 228-1 in a larger state and a smaller constricted state, respectively. Upper leg grip 228-1 may be utilized in place of each of upper leg grips 26 of exosuit 20 or exosuit 120. Likewise, lower leg grips 32 may also have a configuration similar to that shown in Figures 9 and 10.

As shown by Figures 9 and 10, upper leg grip 228-1 comprises a selectively inflatable elastic tube, sleeve, ring or bladder 259 and an inflation port 261. In such an implementation, exosuit 120 may include an inflation mechanism such as a powered pump or a manual pump for inflating or deflating bladder 259. In some implementations, 120 may omit such a pump, but the pump may be separately provided by the person using 120 to adjust the constriction level of bladder 259 about his or her thighs and/or his or her shanks. As shown may Figure 9, the bladder 259 may be inflated to a first inflation state wherein the elastic material is in a less stretched state such that upper leg grip 228-1 has a larger interior or larger diameter for accommodating and gripping a larger thigh (or larger shank). As shown by Figure 10, the bladder 259 may be inflated to a second inflation state, greater than the first inflation state, when elastic material is in a more stretched state such that the upper leg grip 228-1 has a smaller interior or smaller diameter for gripping the smaller thigh (or a smaller shank).

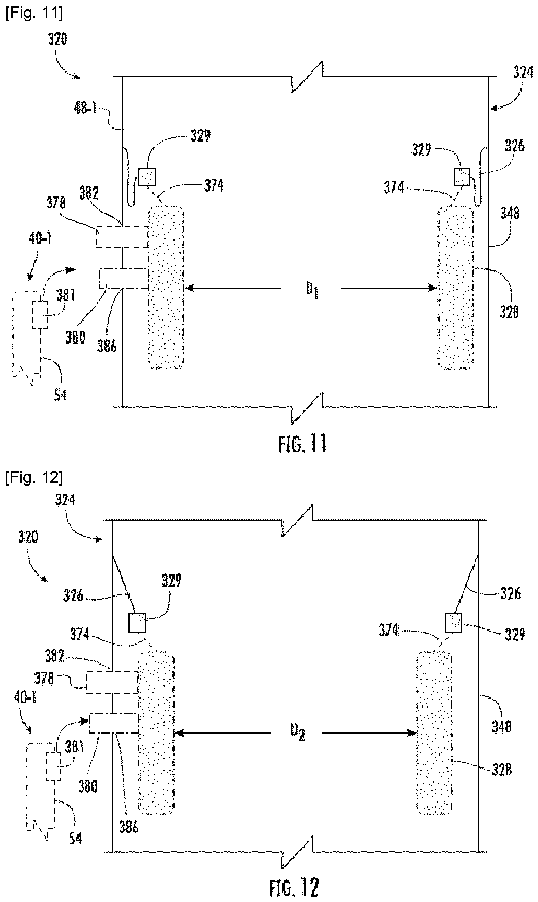

As described above, in some implementations, upper leg grip carriers 26 and/or lower leg grip carriers 127 may additionally function as a tether to accommodate movement of the leg relative to the outer leg portion of the garment 24, 124, to facilitate airflow, and to accommodate the different constricted states of the upper leg grip 26, 128, 228 and/or the lower leg grip 32 (when such adjustability is provided). Likewise, each of the upper leg grips 26, 128, 228 and the lower leg grips 32 may also be provided with a tether to enhance the ability of the upper leg grip on the lower leg grip to be moved relative to the garment. Figures 11 and 12 illustrate portions of an example garment 324 having such tethers with an example upper leg grip 328 in a larger first constricted state and a smaller second constricted state, respectively.

Figures 11 and 12 illustrate portions of an example exosuit 320. Exosuit 320 is similar to exosuit 120 described above except that exosuit 320 specifically comprises garment 324, upper leg grip carriers 326 and upper leg grips 328. Figures 11 and 12 illustrate one thigh portion 348 of garment 324. Although Figures 11 and 12 illustrate portions of the right side of exosuit 320, it should be appreciated that the left side of exosuit 320 has a similar configuration, also comprising upper leg grip carriers 326 and upper leg grip 328 (similar to that shown in Figures 11 and 12). Moreover, exosuit 320 likewise comprises lower leg grip carriers and lower leg grips (left and right) (at locations similar to that of lower leg grip carriers 127 and lower leg grips 32 of exosuit 120), wherein such lower leg grip carriers and lower leg grips may be substantially similar to the upper leg grip carriers and the upper leg grips shown in Figures 11 and 12. In some implementations, the proportions or dimensions of the lower leg grips may be smaller than that of the upper leg grips to accommodate the generally smaller anatomies of the shanks.

As shown by Figures 11 and 12, upper leg grip 328 is actuatable or constrictable between a first constriction state (shown in Figure 11) having an internal dimension D1 and a second smaller constriction state (shown in Figure 12) having an internal dimension D2. In such implementations, upper leg grip 328 may have a construction similar to that of upper leg grip 128-1 shown in Figures 7 and 8 or may have a construction similar to that of upper leg grip 228-1 shown in Figures 9 and 10. As further shown by Figures 11 and 12, upper leg grip 328 further comprises a tether 374, a constriction adjuster 378 and a leg link connection interface 380.

Tether 374 comprises a cord, flap, band, sheet or other flexible member extending from upper leg grip 328 and releasably connected to upper leg link carrier 326 by releasable connection mechanism 329. Upper leg link carrier 326 likewise comprises a cord, flap, band, sheet or other flexible member extending from an interior of garment 324 and releasably connected to tether 374 by the releasable connection mechanism 329. As shown by Figure 11, when grip 328 is in the wider constriction state, carrier 326 and/or tether 374 may be folded or bundled to accommodate the wider state of upper leg grip 328. As shown by Figure 12, when grip 328 is in the smaller constriction state, carrier 326 and tether 374 may be unfolded and at least partially extended. The extension of tether 374 and carrier 326 permits movement of upper leg grip 328 with a reduced impact on the outer shape and size of those portions of garment 324 about upper leg grip 328. In some implementations, carrier 326 and tether 374 have a combined extended (unbunched and unfolded) maximum length of at least 1 inch. In other implementations, carrier 326 and tether 374 have a combined extended (unbunched and unfolded) maximum length of at least 2 inches. In some implementations, carrier 326 and tether 374 have a combined extended maximum length of at least 3 inches, and in some implementations at least 4 inches. In some implementations, the length of tether 374 may be greater than that of carrier 326.

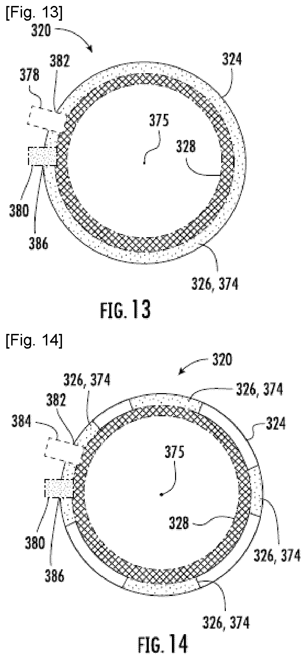

In some implementations, one or both of carrier 326 and tether 374 may be formed from an inelastic fabric material. In other implementations, one or both of carrier 326 and tether 334 may be formed from an elastic material, such as an elastic fabric or an elastic polymer. As shown by Figure 13, in some implementations, at least one of carrier 326 and tether 374 extend substantially continuously about the interior of the leg portion (upper leg portion or thigh portion) of garment 324. As shown by Figure 14, in some implementations, at least one of carrier 326 and tether 374 may comprise distinct portions spaced about the centerline 375 or about the interior of the leg portion of garment 324. Although Figure 14 illustrates four distinct spaced pairs of carrier 326 and tether 374, in other implementations, one or both of carrier 326 and tether 334 may comprise greater or fewer numbers of such portions at uniform or non-uniform spacings about centerline 375.

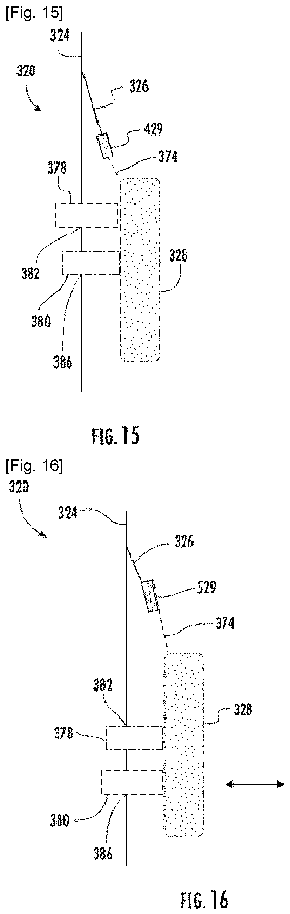

Connector 329, schematically illustrated in Figures 11 and 12, releasably connects carrier 326 to tether 374. Connector 329 facilitates separation of tether 374 from carrier 326 to facilitate the separation and removal of upper leg grip 328 from garment 324 to facilitate repair, replacement or laundering of garment 324 as well as that of upper leg grip 328 or portions thereof. Figures 15 and 16 illustrate two alternative configurations for connector 329.

Figure 15 illustrates an example connector 429 which comprises a zipper (schematically illustrated) having a first portion or zipper tape carried by carrier 326 and a second portion or zipper tape carried by tether 374. Figure 16 illustrates connector 529 which comprises a pair of overlapping hook/loop patches. In some implementations, the patches are sufficiently large to permit adjustment of the extent to which carrier 326 and tether 374 overlap to adjust the overall effective length of carrier 326 and tether 374. In other implementations, connector 329 may have other configurations.

Constriction adjuster 378 comprises a mechanism by which the size or internal diameter of the leg grip (the upper leg grip 328 in the illustrated example) may be adjusted. Constriction adjuster 378 extends through an opening 382 within garment 324, providing manual access to constriction adjuster 378 external to garment 324. In some implementations, constriction adjuster 370 may comprise a dial or rotatable knob. For example, in some implementations, constriction adjuster 370 may comprise a dial connected to a pinion gear which engages a corresponding rack gear of the leg grip. In some implementations, constriction adjuster 370 may comprise a valve for the inflation or deflation of the leg grip.

Leg link connection interface 380 extends from the leg grip (the upper leg grip or thigh grip in the illustrated example) to an aperture 386 in garment 324 to facilitate connection between the leg grip within garment 324 and a connection interface 381 of MAL 40 outside of garment 324. In some implementations, leg link connection interface 380 is configured to provide a tool-less interface by which interface 380 may be releasably connected to MAL 40 without the use of tools. For example, in some implementations, interface 380 may simply snapped or popped into connection with MAL 40 and may be released from MAL 40 in response to manual manipulation of one or more resiliently biased pushbuttons.

Figure 16 illustrates an example connector 529 releasably connecting tether 374 of leg grip 328 to carrier 326. Connector 529 releasably connects leg grip 328 to garment 324 within garment 324. Connector 529 comprises a hook and loop fastener arrangement provided on opposite mutually facing surfaces of tether 374 and carrier 326. Connector 529 may comprise a hook patch on one of tether 374 and carrier 326 and an opposite loop patch on the other of tether 374 and carrier 326.

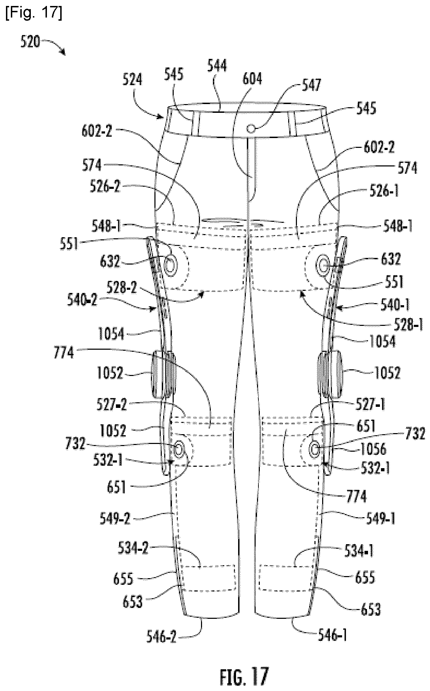

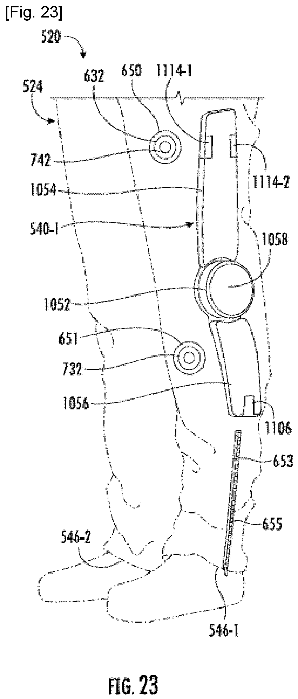

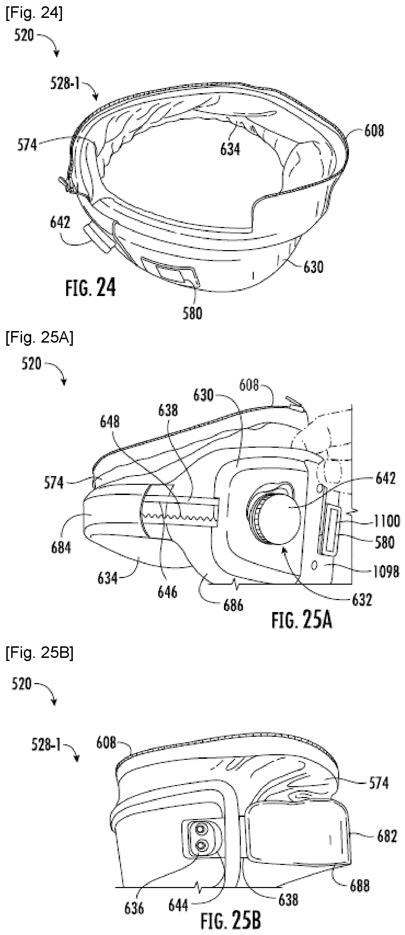

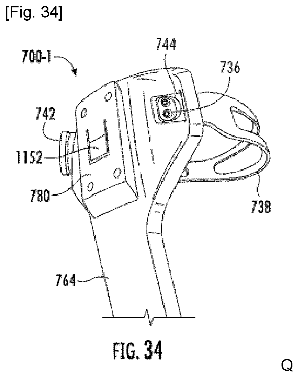

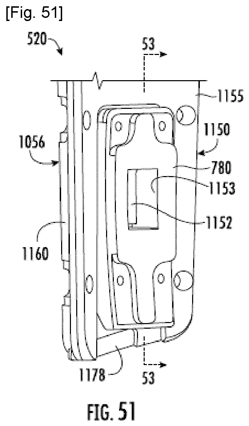

Figures 17-54 illustrate portions of an example exosuit 520. Exosuit 520 provides augmented or powered movement or mobility to the person's legs. Exosuit 520 may use an electrically powered actuator, such as a motor or pump, to assist in raising and lowering the person's thighs and shanks. Exosuit 520 may be used for various applications including outdoor activities, sports activities, hiking, climbing, walking, running, skiing, other civilian applications, physical therapy activities, physical recovery activities, other medical applications and industrial applications. Exosuit 520 comprises exosuit garment 524, upper leg grip carriers 526-1, 526-2 (collectively referred to as carriers 526), leg grip carriers 527-1, 527-2 (collectively referred to as carriers 527), upper leg grips 528-1, 528-2 (collectively referred to as grips 528), lower leg grips 532-1, 532-2 (collectively referred to as grips 532, ankle grips 534-1, 534-2 (collectively referred to as grips 534), and MALs 540-1, 540-2 (collectively referred to as MALs 540)..

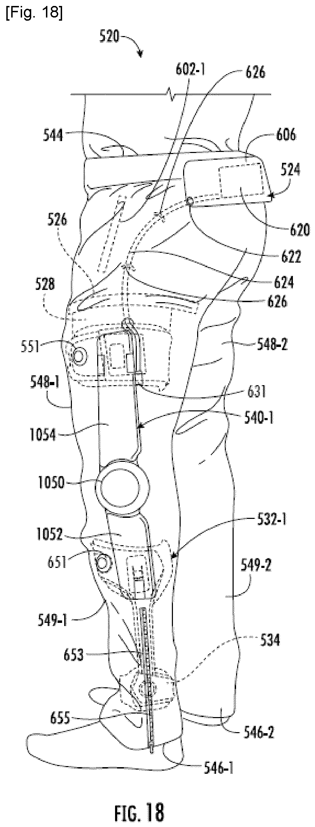

As shown in Figure 17 and 18, exosuit garment 524 comprises a long pair of pants configured to extend below the knees of a person when worn. Exosuit garment 524 comprises one or more panels of fabric or other material forming a waist opening 544, leg openings 546-1, 546-2 (collectively referred to as leg openings 546), thigh portions 548-1, 548-2 (collectively referred to as thigh portions 548), shank portions 549-1, 549-2 (collectively referred to as shank portions 549), pockets 602-1, 602-2 (collectively referred to as pockets 602), a fly 604 and a power storage pocket 606 (shown in Figure 18A-).

Waist opening 544 comprises an opening above thigh portions 548 that is configured to extend about the waist or hips of the person wearing garment 524. Waist opening 544 may include an internally located elastic band to constrict or adjust the size of waist opening 544. Waist opening 544 may include an internally located drawstring for adjusting the size of waist opening 544. In some implementations, the external surface of garment 524 along and about waist opening 544 may comprise belt loops 545 through which a belt may travel and support garment 524 with respect to the waist of the person wearing garment 524. In some implementations, the front of garment 524 may additionally include a front connector 547, such as a snap, button or other fastener located generally above fly 604. In some implementations, garment 524 may omit any mechanism for adjusting the size of waist opening 544 and such or may omit front connector 547 and/or the fly 604.

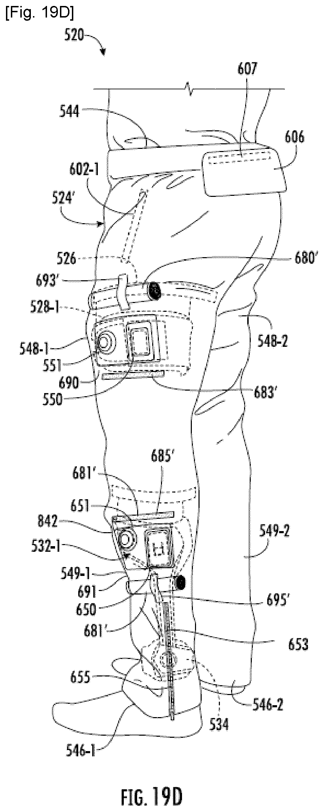

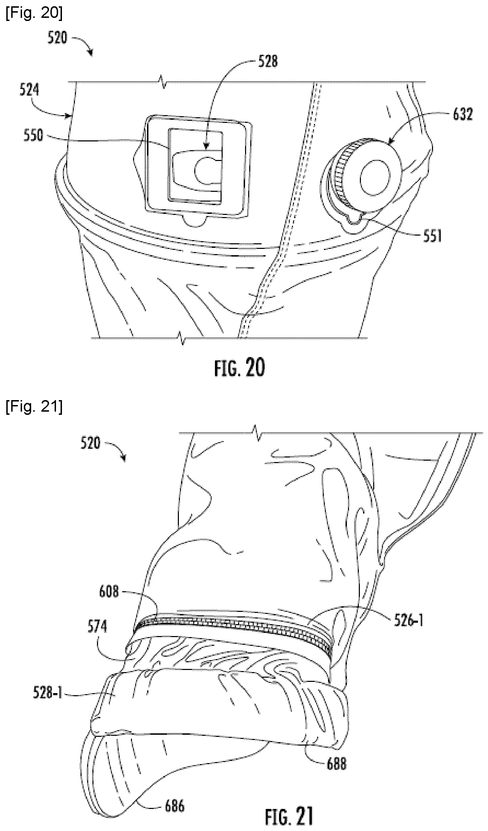

Thigh portions 548 extend below waist opening 544, generally below the cross/crutch point or crotch of garment 524. Thigh portions 548 comprise sleeves that receive the thighs of the person wearing garment 524. Each of thigh portions 548 are configured to additionally receive an upper leg grip 528 which extends at least partially about the thigh of the person wearing garment 524. As especially shown by Figure 20, each of thigh portions 548 additionally comprises a link connection aperture 550 (shown in Fig. 19D) for connection of the internally located upper leg grip 528 (with respect to the pants leg of garment 524) to a corresponding particular MAL 540 and a constriction adjuster opening 551 through which a constriction adjuster 632 (shown as comprising a dial) of upper leg grip 528 extends or projects to an exterior of garment 524.

Shank portions 549 extend downwardly from thigh portions 548 and comprise those portions of the pants of garment 524 that are configured to extend from and below the knees of the person wearing garment 524. Shank portions 549 extend between thigh portions 548 and leg openings 546. Similar to thigh portions 548, shank portions 549 comprise a link connection aperture 650 (shown in Fig. 19D) and a constriction adjuster aperture or opening 651 (shown in Figure 17). As with link connection aperture 550, link connection aperture 650 extends through the one or more panels forming thigh portion 548 to facilitate connection between the internally located (with respect to the pants leg of garment 524) lower leg grip 532 and the externally located MAL 540. As with constriction adjuster opening 551, constriction adjuster opening 651 extends through the one or more panels forming shank portion 549 to facilitate manual access to the corresponding internally located constriction adjuster 732 of lower leg grip 532.

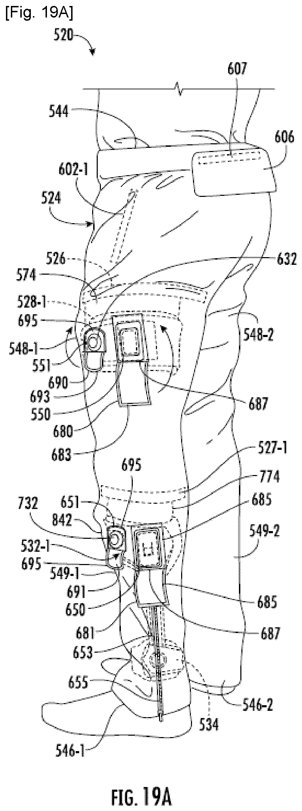

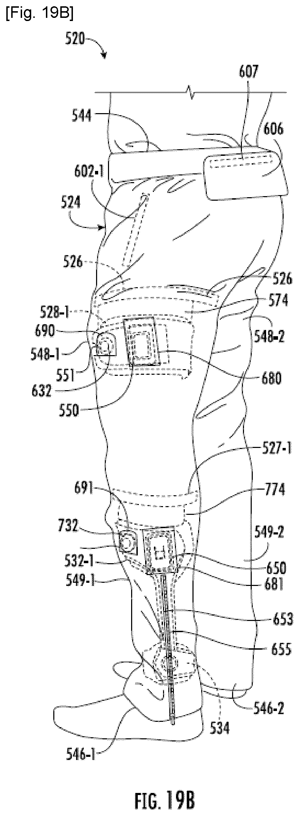

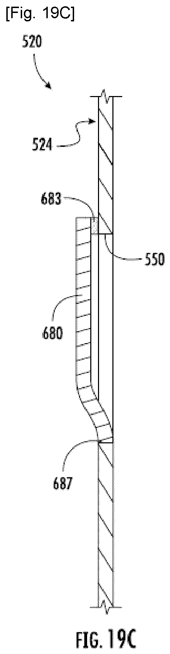

As further shown by Figures 19A, 19B and 19C, in some implementations, garment 524 may additionally comprise one or more cover panels for covering and closing apertures 550, 650 and openings 551, 651 when such apertures or openings are not being used, when upper leg grips 528 and lower leg grip units 700 are not being used or when MALs 540 are not being used. In the example illustrated, garment 524 comprises cover panels 680 and 681 for selectively covering apertures 550 and 650, respectively. In some implementations, cover panels 680, 681 comprise flaps of material cut from the remaining panels forming garment 524, wherein the flaps bend or fold away from the apertures to facilitate connection of the upper leg grip 528 in the lower leg grip unit 700 to the associated MAL 540. When the apertures are to be covered or closed, the flaps may be bent and retained over the apertures. In some implementations, in lieu of hanging or stretching below, above or to the sides of apertures 550, 650, cover panels 680, 681 may alternatively be rolled or folded and secured in a rolled or folded state when apertures 550, 650 are no longer being used for the connection of the internal upper leg grip 528 or the internal lower leg grip unit 700 to the external MAL 540.

Garment 524 additionally comprises cover retainers 683, 685. Retainers 683 and 685 comprise connection mechanisms configured to releasably or temporarily retain and secure cover panels 680 and 681, respectively, in states in which the cover panels 680, 681 extend over and cover their respective apertures 550, 650. In the example illustrated, cover retainers 683 and 685 each are in the form of hoop and loop fastener (VELCRO^{™}) arrangements , wherein the exterior borders of apertures 550, 650 comprise one of a hook or loop of a hook and loop fastener system, wherein at least exterior borders of the cover panels 680, 681 comprise the other of the hook or loop of the hook and loop fastener system. In still other implementations, the flaps serving as cover panels 680, 681 may be secured in an aperture covering state by other releasable connection mechanisms or retainers 683, 685 in the form of snaps, buttons, zippers and the like. Although each of the flaps forming cover panels 680, 681 is illustrated as folding along a fold 687 below the respective apertures 550, 650, utilizing gravity to assist in retaining the panels 680, 681 in the positions in which the apertures 550, 650 are open, in other implementations, the cover panels 680, 681 may alternatively fold on fold lines above the apertures or to the sides of such apertures. In yet other implementations, the cover panels 680, 681 may be completely separable from garment 524 rather than integrally formed as part of a single unitary body with the other panels of garment 524. Although illustrated as extending along an exterior of garment 524 when covering apertures 550, 650, in other implementations, cover panels 680, 681 may be secured across and over the apertures 550, 650 on an interior of the pant legs of garment 524. In some implementations, cover panels 680, 681 may be omitted.

In the example illustrated, garment 524 additionally comprises cover panels 690 and 691 for selectively covering openings 551, 651, respectively. In some implementations, cover panels 690, 691 comprise flaps of material cut from the remaining panels forming garment 524, wherein the flaps bend or fold away from the apertures to facilitate access to the manual interfaces (dials) of the constriction adjusters which are aligned with and may at least partially project through openings 551 and 651. When the openings 551, 651 are to be covered or closed, the flaps may be bent and retained over the openings. In some implementations, in lieu of hanging or stretching below, above or to the sides of apertures opening 551, 651, cover panels 690, 691 may alternatively be rolled or folded and secured in a rolled or folded state when openings 551, 651 are no longer being used for the providing axis to the dials of constriction adjuster at interfaces.

Garment 524 additionally comprises cover retainers 693, 695. Retainers 693 and 695 comprise connection mechanisms configured to releasably or temporarily retain and secure cover panels 690 and 691, respectively, in states in which the cover panels 690, 691 extend over and cover their respective openings 551, 651. In the example illustrated, cover retainers 683 and 685 each are in the form of hook and loop fastener arrangements, wherein the exterior borders of openings 551, 651 comprise one of a hook or loop of a hook and loop fastener system, wherein at least exterior borders of the cover panels 690, 691 comprise the other of the hook or loop of the hook and loop fastener system. In still other implementations, the flaps serving as cover panels 690, 691 may be secured in an aperture covering state by other releasable connection mechanism such as snaps, buttons, zippers and the like. Although each of the flaps forming cover panels 690, 691 is illustrated as folding along a fold below the respective openings 551, 651, utilizing gravity to assist in retaining the panels 690, 691 in the positions in which the openings 551, 651 are open. In other implementations, the cover panels 690, 691 may alternatively fold on fold lines above the apertures or to the sides of such apertures. In yet other implementations, the cover panels 690, 691 may be completely separable from garment 524 rather than integrally formed as part of a single unitary body with the other panels of garment 524. Although illustrated as extending along an exterior of garment 524 when covering openings 551, 651, in other implementations, cover panels 690, 691 may be secured across and over the opening 551, 651 on an interior of the pant legs of garment 524. In some implementations, cover panels 690, 691 may be omitted.

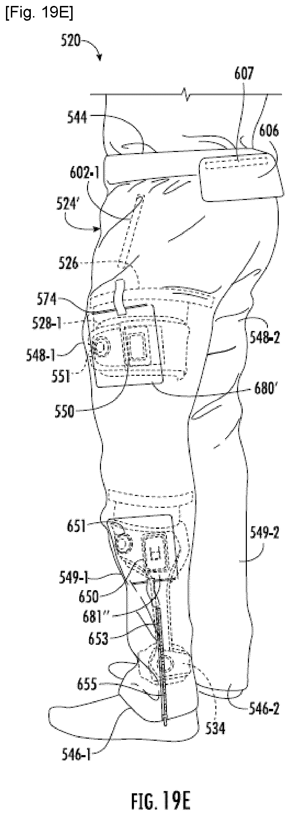

Figures 19D and 19E illustrate garment 524' with a differently configured set of flaps for selectively covering apertures 550, 650 and openings 551, 651. The remaining components of garment 524' are the same as the garment 524 described above with respect to Figures 19A-19C. As shown by Figures 19D and 19E, garment 524' comprises cover panels 680' and 681'. Cover panel 680' is sized and located so as to extend across and cover both of aperture 550 and opening 551. Likewise, cover panel 681' is sized and located so as to extend across and cover both of aperture 650 and opening 651. In the example illustrated, cover panels 680' and 681'are downwardly and upwardly pivotable about respective horizonal folds or flexible hinges (where the fabric or other material bends), respectively, from aperture/opening uncovered states to aperture/opening covered states. In other implementations, cover panels 680' and 681' may alternatively pivot in other directions about vertical fold from the uncovered states to the covered states. In still other implementations, cover panel 680' and 681'may alternatively pivot rearwardly or forwardly about vertical folds/ flexible hinges between the aperture/opening covering states and the aperture/opening uncovered states.

As shown by Figure 19D, garment 524' may additionally comprise cover retainers 683' and 685' for retaining cover panel 680' and 681' in the aperture/opening covering states in the aperture/opening uncovered states, respectively. In the example illustrated, retainer 683' may comprise a hook and loop fastener arrangement below the perimeter of panel 680' and along the perimeter of the region of garment 524' containing both aperture 550 and opening 551. In the example illustrated, garment 524'may further comprise retainers 693' and 695'. Retainer 693' may comprise a hook and loop fastener arrangement on the end of a strap configured to wrap about rolled up cover panel 680' to retain the cover panel 680' in the rolled state, exposing aperture 550. Retainer 693' is located so as to support the rolled up cover panel 680'at a location above the upper end of MAL 540 when secured to the leg grips along the outside of garment 524'.

Similarly, retainer 685' may comprise a hook and loop fastener arrangement along the perimeter of such panels 681' and above the perimeter of the region of garment 524' containing both aperture 650 and opening 651. In the example illustrated, garment 524' may additionally comprise a retainer 695'. Retainer 695' may comprise a hook and loop fastener arrangement on the end of a strap configured to wrap about rolled up cover panel 681' to retain the cover panel 681' in the rolled state, exposing aperture 650 and opening 651. Retainer 695' is located so as to support the rolled down cover panel 681'at a location below the lower end of MAL 540 when it is secured to the leg grips along the outside of garment 524'. Because cover panels 680' and 681' are rolled in opposite directions away from the top and bottom ends of the MAL 540, the rolled up cover panels are less likely to interfere with tight or close positioning of MAL 540 to the leg grips. In other implementations, one or more of the retainers 683', 685', 693' and 695' may include other releasable fastening mechanisms in place of hook and loop arrangements, such as buttons, snaps, buckles, zippers and the like for selectively retaining the cover panels 680' and 681' in the aperture/opening covering states and/or the apertures/opening exposing or uncovered states.

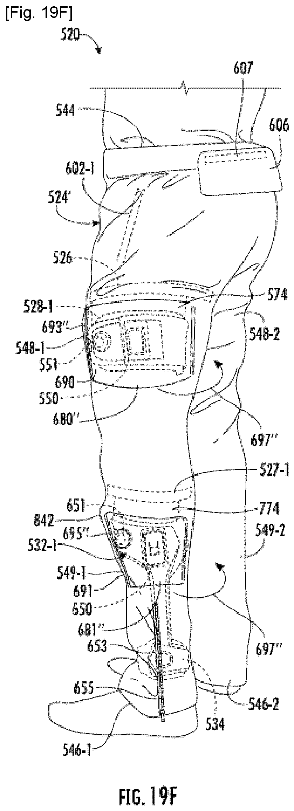

In other implementations, as shown by Figure 19F, garment 524' may comprise cover panels 680" and 681" in place of cover panel 680' and 681'. In contrast to cover panels 680' and 681' which are formed by cuts so as to bend about substantially horizontal flexible hinges, cover panel 680"and 681"are formed by cuts so as to bend about substantially vertical flexible hinges between aperture/opening covering states and aperture/opening exposing states. In the example illustrated, cover panels 680" and 681" extend forwardly from their respective flexible hinges when in the aperture/opening covering states and extending rearwardly from the flexible hinges when in the aperture/opening exposing states. Retainers 693" and 695" may be located along a front perimeter or front side of openings (towards the front of the pants) to releasably retain the cover panels 680" and 681" in the aperture session opening closing states. In the example illustrated, the retainers 693" and 695" may comprise a hook and loop fastener arrangement configured to cooperate with hook and loop material positioned on the perimeter of the cover panels 681"and 683". In other implementations, the retainers 693" and 695" may comprise other releasable mechanisms such as snaps, buckles, zippers, buttons and the like. As indicated by arrows 697", when the MAL 540 is to be attached, the cover panels 680"and 681"may be detached from retainers 693"and 695", may be rolled rearwardly or wrapped rearwardly about the panel leg, wherein additional retainers may be provided on garment 524" to releasably retain the rearwardly rolled or wrapped cover panel 680" and 681"in place. Such additional retainers may be hook and loop fastener arrangements, buttons, snaps, zippers, buckles and the like. In other implementations, the cover panels 680"and 681" be alternatively extend rearwardly from respective flexible hinges, cross the apertures in openings when in the aperture session opening covering states.

In yet other implementations, one or both of panels 680' and 681' (or panels 680" and 681") may be completely removable or separable from garment 524 when apertures 550, 650 are being used for connection of the MAL 540 to the internal leg grips or when openings 551, 651 are being used for access to the interface to adjust the size or gripping diameter of the leg grips.

As shown by Figure 18, each of shank portions 549 additionally comprises an elongate slit 653 extending upwards from the respective lower leg opening 546 to a location above ankle grip 534. The elongate slit 653 permits portions of shank portion 549 to be separated and pulled apart to expose and provide manual access through a side of shank portion 549 to a constriction adjuster interface (such as a dial) of the associated ankle grip 534. In some implementations, the elongate slit 653 may have a retainer 655 to releasably retain opposite sides of the slit 653 in a closed state. In some implementations, the retainer 655 may be in the form of a zipper. In other implementations, the retainer 655 may be in the form of one or more hook and loop fastener arrangements. In yet other implementations, the retainer may be in the form of one or more snaps, buckles, buttons or other mechanisms for selectively opening and closing the slit 653 for accessing ankle grips 534. In some implementations, retainer 655 may be omitted.

Pockets 602 are located on both sides of fly 604 along the front face or sides of garment 524, at or above thigh portions 548 and extending towards waist opening 544. In the example illustrated, pockets 602 have mouths that face rearwardly towards the sides or rear of the pants of garment 524. In other implementations, pocket 602 may have mouth that face in Mormon upward direction, towards waist opening 544. In still other implementations, one or more of pockets 602 may be omitted or may have other configurations.

Fly 604 extends along a front of garment 524 generally from waist portion 544 towards the cross/crutch point or crotch of garment 524. Fly 604 permits opposite sides of the front portion of, 524 to be separated. In some implementations, fly 604 may comprise a zipper for selectively opening and closing the separation. In other implementations, fly 604 may comprise snaps, buttons or other securement mechanisms. In some implementations, fly 604 may be omitted.

Power storage pocket 606 (shown in Figures 18) comprises a pouch, bag, pack or other containment structure configured to contain an electric power source 620 (such as a battery) (schematically illustrated in Figure 18). Power storage pocket 606 is connected are secured to a remainder of garment 524 proximate to waist opening 544 at a centered rear location of the pants of garment 524. Because the garment 524 supports the power source 620 for the powered actuator of the MAL 540 at a location along the waist opening 544 of the garment, the mass of the battery or other power source 620 need not be lifted when motion of the person's leg is being augmented. The mass of the battery or other power source 620 may be more comfortably positioned along the back of the person wearing the garment 524 and the exosuit 520, while also being less conspicuous and reducing strain on the back of the person wearing the exosuit 520. In other implementations, the battery or other power source 620 for the powered actuator of MAL 540-1 may be at other locations.

As further shown by Figures 19D, in some implementations, power storage pocket 606 may be releasably connected to the remainder of garment 524, along waist opening 544 by one or more connectors 607. The connectors 607 permit power source pocket 606 to be removed from a remainder of garment 524 when not needed. In some implementations, the connectors 607 may comprise opposing portions of a hook and loop fastener arrangement, wherein one of hooks or loops are provided on a rear portion of garment 524 proximate to waist opening 544 and the other of the hooks or loops our provided on an outer forwardly facing surface of pocket 606. In yet other implementations, the connector 607 may be in the form of a zipper, snaps, buckles, buttons or other releasable connection mechanisms. In other implementations, connectors 607 may be omitted, wherein pocket 606 may be fixedly secured to a remainder of garment 524 with stitches, adhesives or welds.

As shown by Figure 18, pocket 606 comprise a lower opening 622 through which one or more electrical cords or cables 624 pass. The garment 524 may include one or more sleeves 626 or other internal structures to retain the power cord 624 along an interior of the garment 524, along the leg portions of the pants. In some implementations, the one or more sleeves 626 can be elongated sleeves through which the cord or cable is routed. In other implementations, the sleeves 626 can be a series of loops for retaining the cord or cable at predetermined locations within the garment 524. The garment 524 may include an opening 628 proximate to the location of the powered actuator of MAL 540-1, wherein the power cord or cable 624 may exit the garment 524 for connection to a connection port or plug 631 electrically connected to the powered actuator. In the example illustrated, the port or plug 630 has a plug receiving mouth or connection interface that faces vertically in an upward direction along the longitudinal centerline of the leg of garment 524, permitting those external portions of cord 624 to closely follow a rearwardly facing perimeter side edge of MAL 540-1, reducing the likelihood of the cord undesirably catching on external objects and making the external portions of cord 624 less conspicuous. Although not illustrated, pocket 606 comprises an additional opening 622 for an additional power cord 624 that passes through associated sleeve 626 and exits an opening 628 for connection to a port or plug 631 of the MAL 540-2 on the right pants leg of garment 524.

Upper leg grip carriers 526 (sometimes referred to as a thigh cuff carriers) releasably connect upper leg grip 528 to garment 524 within garment 524. Upper leg grip carriers 526 facilitate separation and removal of upper leg grips 528 from garment 524 to facilitate repair, replacement or laundering of garment 524 and repair, replacement or laundering of upper leg grip 528. As shown by Figure 21 which illustrates one of the pants legs of garment 524 rolled and turned inside out, upper leg grip carrier 526 may comprise a zipper 608, wherein first portion of a chain of the zipper 608 is provided on carrier 526 and cooperates with a second portion of the chain of the zipper 608, coupled to upper leg grip 528, to releasably connect garment 524 to the upper leg grips 528. In other implementations, each of upper leg grip carriers 526 may comprise one of hooks and loops of a hook and loop fastener arrangement which cooperate with the other of hooks and loops of the hook and loop fastener arrangement, coupled to the associated leg grip 528, to releasably connect garment 524 to the upper leg grip. 526. In some implementations, garment 524 and upper leg grips 528 have other cooperating connection mechanisms that facilitate releasable connection such as snaps, hooks, buttons and the like.

In the illustrated example each of upper leg grip carriers 526 extends 360° about the centerline of thigh portions 548. In other implementations, upper leg grip carriers 526 comprise multiple individual connectors spaced from one another about the centerlines of thigh portion 548-1 and 548-2. In some implementations, leg grip carriers 526 are located within thigh portions 548. In other implementations, upper leg grip carriers 526 may be located at a higher position, between the upper extent of thigh portions 548 and waist opening 544. In some implementations, upper leg grip carriers 526 do not releasably connect upper leg grips 528 to garment 524 but form a more permanent fixed connection between upper leg grips 528 and garment 524.

In some implementations, upper leg grip carriers 526 further serve as tethers, comprising one or more cords, straps, bands or the like within thigh portions 548, wherein carriers 526 each have a first end portion affixed to garment 524 and a second end portion connected to upper leg grip 528. Comprising or functioning as a tether, upper leg grip carrier 526 flexibly or movably suspends upper leg grip 528 from garment 524 within the respective thigh portion 548. Said another way, each of upper leg grip carriers 526 permits relative movement of the associated upper leg grip 528 with respect to the associated thigh portion 548. Upper leg grip carriers 526 facilitate inward spacing of upper leg grips 528 from the interior sides of thigh portions 548. As result, air flow passages are provided between the exteriors of upper leg grips 528 and the interior of thigh portions 548. In addition, the side of the person wearing garment 524 is less constricted. In implementations where upper leg grips 528 are adjustable to provide various user selectable sizes or degrees of constriction, upper leg grip carriers 528 permit upper leg grips 528 to be constricted with less or without inward movement or constriction of thigh portions 548-1, maintaining the outward appearance of thigh portions 548.

In some implementations, upper leg grip carriers 526 each have a length, (extending from a point of connection with garment 524 to the point of connection with upper leg grip 528) of at least 0.5 inches and in some implementations, at least 1 inch. In other implementations, the length of the upper leg grip carrier 526 to the point of connection with the upper leg grip 528 can be at least 2 inches. As will be described hereafter, in some implementations, upper leg grips 528 may likewise be provided with a band, strap, cord or the like serving as an additional tether, wherein a first end portion additional tether is connected to the remainder of the upper leg grip 528 and a second end portion is releasably or fixedly connected to the upper leg grip carrier 526. In such implementations, the additional tether of the upper leg grip 528 may also have a length. In such implementations, the length of the upper leg grip carrier 526 and the length of the additional tether provided by upper leg grip 528 have a combined length of at least 1 inch and in some implementations, at least 2 inches to provide adjustability of upper leg grip 528 with little or no impact on thigh portions 548.

As with thigh portions 548, shank portions 549 are individually associated with lower leg grip carriers 527. Lower leg grip carriers 527 (sometimes referred to as shank cuff carriers) releasably connect lower leg grip 527 to garment 524 within garment 524. Lower leg grip carriers 527 facilitate separation and removal lower leg grips 532 from garment 524 to facilitate repair, replacement or laundering of garment 524 and repair, replacement or laundering of lower leg grip 532. Similar to upper leg grip carrier 526, as shown in Figure 21, lower leg grip carrier 527 may comprise a zipper 608, wherein first portion of a chain of the zipper 608 is provided on carrier 527 and cooperates with a second portion of the chain of the zipper 608, coupled to lower leg grip 532, to releasably connect garment 524 to the lower leg grips 532. In other implementations, each of lower leg grip carriers 527 may comprise one of hooks and loops of a hook and loop fastener arrangement which cooperate with the other of hooks and loops of the hook and loop fastener arrangement, coupled to the associated leg grip 532, to releasably connect garment 524 to the lower leg grip. 532. In some implementations, garment 524 and lower leg grips 532 have other cooperating connection mechanisms that facilitate releasable connection such as snaps, hooks, buttons and the like.

In the illustrated example, each of lower leg grip carriers 527 extends 360 degrees about the centerline of shank portions 549. In other implementations, lower leg grip carriers 527 comprise multiple individual connectors spaced from one another about the centerlines of shank portions 549. In some implementations, lower leg grip carriers 527 do not releasably connect lower leg grips 532 to garment 524 but form a more permanent fixed connection between lower leg grips 532 and garment 524.

In some implementations, lower leg grip carriers 527 further serve as tethers, comprising one or more cords, straps, bands or the like within shank portions 549, wherein carriers 527 each have a first end portion affixed to garment 524 and a second end portion connected to lower leg grip 532. Comprising or functioning as a tether, lower leg grip carrier 527 flexibly or movably suspends lower leg grip 532 from garment 524 within the respective shank portion 549. Said another way, each of lower leg grip carriers 527 permits relative movement of the associated lower leg grip 532 with respect to the associated shank portion 549. Lower leg grip carriers 527 facilitate inward spacing of lower leg grips 532 from the interior sides of shank portions 549. As result, air flow passages are provided between the exteriors of lower leg grips 532 and the interior of shank portions 549. In addition, the side of the person wearing garment 524 is less constricted. In implementations where lower leg grips 532 are adjustable to provide various user selectable sizes or degrees of constriction, lower leg grip carriers 527 permit upper leg grips 532 to be constricted with less or without inward movement or constriction of shank portions 549, while maintaining a smooth, unwrinkled or un-bunched outward appearance of shank portions 549.

In some implementations, lower leg grip carriers 527 each have a length, (extending from a point of connection with garment 524 to the point of connection with lower leg grip 532) of at least 0.5 inches and in some implementations, at least 1 inch. As will be described hereafter, in some implementations, lower leg grips 532 may likewise be provided with a band, strap, cord or the like serving as an additional tether, wherein a first end portion additional tether is connected to the remainder of the lower leg grip 532 and a second end portion is releasably or fixedly connected to the lower leg grip carrier 527. In such implementations, the additional tether of the lower leg grip 532 may also have a length. In such implementations, the length of the lower leg grip carrier 527 and the length of the additional tether provided by lower leg grip 532 have a combined length of at least 1 inch and in some implementations, at least 2 inches to provide adjustability of lower leg grip 532 with little or no impact on shank portions 549.

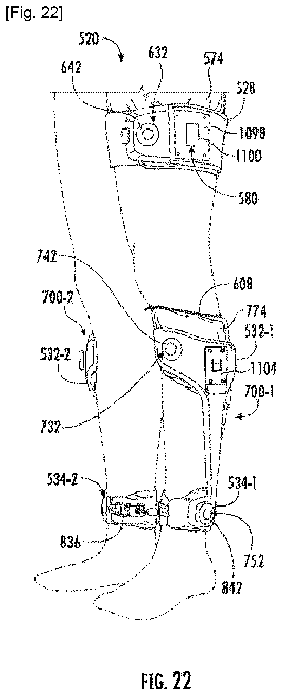

Upper leg grip 528-1, lower leg grip 532-1 and ankle grip 534-1 are each shown in Figure 22 without the overlying portions of garment 524 and without being connected to MAL 540-1. As should be appreciated, upper leg grip 528-2, lower leg grip 532-2 and ankle grip 534-2 have similar configuration to that shown and described with respect to upper leg grip 528-1, lower leg grip 532-1 and ankle grip 534-1, respectively. As shown by Figures 17 and 18, upper leg grip 528 and lower leg grip 532 are configured to connect the person's thigh and shank, respectively, to MAL 540. Upper leg grip 528, lower leg grip 532 and ankle grip 534 are each sufficiently stiff (in the vertical direction) so as to be loadbearing. Likewise, the connection between upper leg grip 528, lower leg grip 532 and the MALs 540 is also sufficiently strong and stiff to be loadbearing. Upper leg grip 528 is in the form of a thigh cuff configured to completely surround the thigh of the person wearing the exosuit. Lower leg grip 532 is similar to upper leg grip 528 in that lower leg grip 532 may be in the form of a shank cuff configured to completely surround the shank or lower leg of a person wearing the exosuit 520. In some implementations, upper leg grip 528 and/or the lower leg grip 532 may alternatively be in the form of an interrupted or broken loop having a C or U shape, permitting the person to insert portions of his or her leg into the grip in a sideways or lateral fashion, perpendicular to the centerline of the broken loop.

Figures 21-31 illustrate an example of one of upper leg grips 528 in greater detail. The example upper leg grip 528-1 comprises outer skeleton 630, constriction adjuster 632, inner cushion 634, tether 574, and upper leg link connection interface 580. The outer skeleton, sometimes referred to as the "hard cuff", serves as a backbone or spine for the leg grip 528, serving as a structural support for the leg grip 528 while being sufficiently flexible to facilitate wrapping of the leg grip about the person's leg. Outer skeleton 630 comprises a rigid, but flexible outer housing or support for supporting constriction adjuster 632 and upper leg link connection interface 580.

Constriction adjuster 632 facilitates selective adjustment to the inner diameter of the generally circular or oval cuff formed by outer skeleton 630 and inner cushion 634. Constriction adjuster 632 adjusts the interior diameter by adjusting the length of inner cushion 634. In the example illustrated, constriction adjuster 632 is similar to the constriction adjuster shown in Figures 7 and 8, wherein the degree of overlap is adjusted to adjust the inner diameter. Constriction adjuster 632 comprises connector 636, flexible strap 638, pinion gear 640 and dial 642.

Connector 636 comprises a mechanism coupled to outer skeleton 630 and is configured to be releasably connected to an end portion of strap 638. In the example illustrated, strap 638 comprises an opening or aperture 644 sized and shaped so as to receive connector 636 which has a neck supporting a larger head, wherein the head may be passed through aperture 644, capturing the end of strap 638 about the neck. In other implementations, the end of the strap 638 and the connector 636 may have other configurations to facilitate releasable connection of the end of the strap 638 to the outer skeleton 630. For example, in some implementations, a quick release buckle may be utilized.

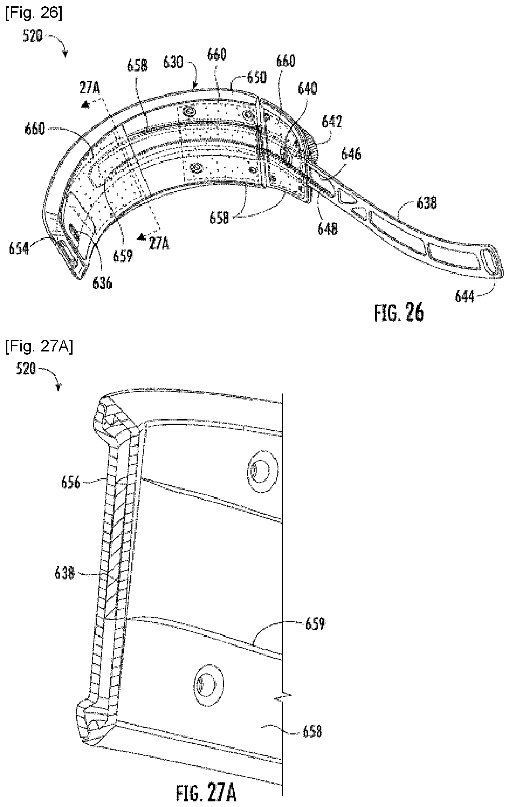

Flexible strap 638 comprises an elongate strap formed of a material or dimensioned so as to be bendable to wrap about the thigh of the person wearing exosuit 520. In some implementations, the flexible strap 638 may be formed from a polymer material. In addition to aperture 644, flexible strap 638 comprises a slot 646 bordered on one side by a roll or rack of teeth 648. As shown in Figure 26, slot 646 receives pinion gear 640 with teeth 648 being engaged by pinion gear 640.

Pinion gear 640 comprises a generally circular disk having a peripheral edge provided with teeth that intermesh with the teeth 648 along slot 646. Dial 642 serves as a manual interface for rotating pinion gear 640. In some implementations, dial 642 is directly connected to pinion gear 640. In other implementations, dial 642 may be connected to pinion gear 640 by intermediate gear train. Dial 642 is configured to project through or otherwise be accessible through opening 551 of garment 524. Manual rotation of dial 642 results in rotation of pinion gear 640 to translate strap 638, adjusting an extent of the length of strap 638 extending beyond outer skeleton 630, thereby adjusting the inner diameter of upper leg grip 528-1.

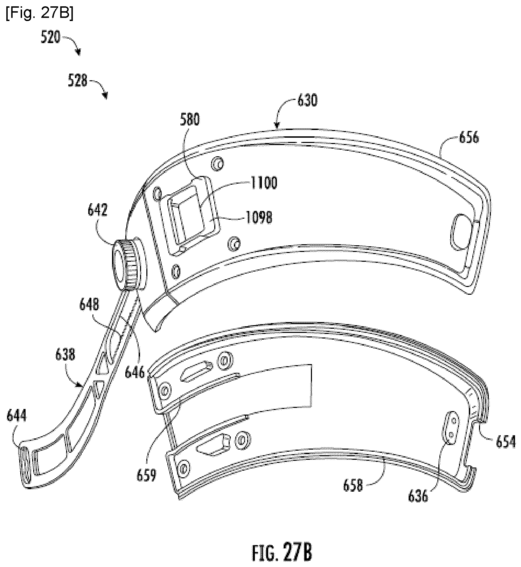

As further shown by Figures 27A and 27B, outer skeleton 630 comprises connection panel 656 and cover panel 658. Connection panel 656 supports pinion gear 640, dial 642 and any geartrain therebetween. Connection panel 656 further supports upper leg link connection interface 580. Connection panel 656 cooperatively mates with cover panel 658 to receive portions of strap 638 therebetween. As shown by Figure 26, 27A and 27B, panels 656 and 658 cooperate to form an opening 654 through which the end of strap 638 may pass for positioning aperture 644 over connector 636.

In addition, panels 656 and 658 further cooperate to form an interior guide 659 in the form of an internal channel for guiding the translation of strap 638 between panels 656 and 658 in response to rotation of dial 642 and pinion gear 640. As shown by Figure 26, the inner side facing surface of panel 658 may have connectors 660 for releasably connecting to inner cushion 634. In some implementations, connector 660 may comprise one or more patches of hook and loop fastener arrangement, wherein a first set of patches providing a first portion of a hook and loop fastener arrangement releasably connects to a second patch providing a second portion of the hook and loop fastener arrangement which is secured to inner cushion 634. In other implementations, other connectors may be provided on panel 658 for releasable connection to the cushion 634 or may otherwise be provided by skeleton 630.

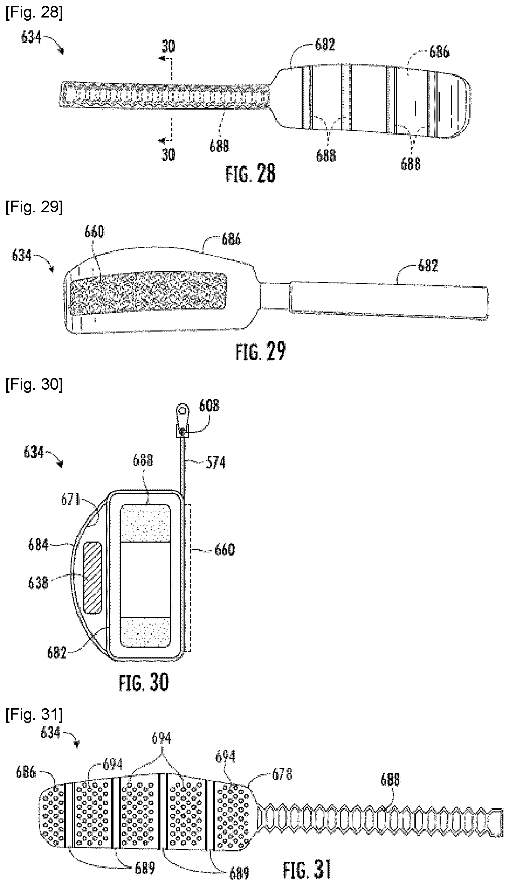

Figures 28-31 illustrate inner cushion 634 and tether 574. Inner cushion 634 provides a layer of cushioning between skeleton 630 and the person's thigh. Inner cushion 634 further wraps about the person's thigh to facilitate gripping of the person's thigh and securement of the person's thigh to skeleton 630 and the connected MAL 540. Inner cushion 634 comprises a compressible core pad 678, outer elastic enclosure 682, and strap guide 684.

As shown by Figure 31, compressible core pad 678 comprise a single integral unitary body foam construction comprising skeleton pad 686 and accordion 688. Pad 686 is formed from a compressible material and is configured to overlay skeleton 630, extending between skeleton 630 and the person's thigh. Pad 686 is compressible against the thigh of the person wearing the leg grip. Pad 686 may be shaped and sized so as to cover or extend outwardly beyond majority if not all of the entire perimeter of skeleton 630. As shown by Figure 31, in some implementations, pad 686 may comprise airflow channels or grooves 689 on those surfaces facing the person wearing exosuit 520. Grooves 689 may be molded into the foam material forming pad 686 or may be cut into the material forming pad 686. Such grooves 689 facilitate airflow and cooling. In other implementations, such grooves 689 may have other shapes and configurations or may be omitted. In some implementations, pad 686 as well as outer skeleton 630 may additionally comprise additional openings therethrough to facilitate breathability. As shown may Figure 31, pad 686 may include openings 694 that extend through pad 686. The size, shape, number and density of such openings may have other configurations and that shown and/or may vary along the length of pad 686.

Accordion 688 extends from pad 686, wherein the total length of pad 686 and accordion 688 is sufficient to wrap about the thigh of a person wearing exosuit 520. In one implementation, this total length is at least 8 inches. Accordion 688 is formed from multiple accordion segments, facilitating the linear change in length of accordion 688 to accommodate different degrees of constriction about the person's thigh resulting from the repositioning of strap 638 in response to rotation of dial 642.

Outer elastic enclosure 682 extends at least about accordion 688 and in the example illustrated, extends about or encloses both pad 686 and accordion 688. Outer elastic enclosure 682 may be formed from an elastic material, such as an elastic fabric. The elastic material accommodates the stretching of accordion 688. In some implementations, enclosure 682 may be omitted.

As shown by Figure 29, one face of pad 686 includes a portion of connector 660 on those portions of the outer elastic enclosure 682 that covers pad 686. In particular, the portion of connector 660 on pad 686 may be one of hooks and loops of a hook and loop fastener arrangement, wherein the face of panel 658 of skeleton 630 may include the other of hooks and loops of the hook and loop fastener arrangement. As result, cushion 634 may be secured to skeleton 63 which is, in turn, connected to strap 638 and MAL 540 via interface 580.

Figure 30 is a sectional view illustrating cushion 634 with strap 638 and tether 574. As shown by Figure 30, strap guide 684 comprises an elongate outer sleeve or panel forming an interior 671 that slidably receives strap 638. Although strap guide 684 extends along a majority if not the entirety of strap 638, from one end of skeleton 630 to the other end of skeleton 630, in other implementations, strap guide 684 may comprise a series of spaced bands are loops.

Tether 574 is similar to carriers 526 except that tether 574 extends from the top of cushion 634. Tether 574 cooperates with upper leg grip carrier 526 to releasably connect upper leg grip 528 to garment 524 within garment 524. Tether 574 facilitates separation and removal upper leg grips 528 from garment 524 to facilitate repair, replacement or laundering of garment 524 and repair, replacement or laundering of upper leg grip 528. As shown by Figure 21 which illustrates one of the pants legs of garment 524 rolled and turned inside out, tether 574 may be releasably secured to upper leg grip carrier 526 and garment 524 by zipper 608, wherein a first portion of a chain of the zipper 608 is provided on carrier 526 and cooperates with a second portion of the chain of the zipper 608, coupled to tether 574, to releasably connect garment 524 to the upper leg grips 528. In other implementations, each of upper leg grip carriers 526 may comprise one of hooks and loops of a hook and loop fastener arrangement which cooperate with the other of hooks and loops of the hook and loop fastener arrangement, coupled to the associated tether 574, to releasably connect garment 524 to the upper leg grip. 526. In some implementations, tethers 574 may be releasably coupled to upper leg grips 528 by other cooperating connection mechanisms that facilitate releasable connection such as snaps, hooks, buttons and the like.

In the illustrated example, each of tethers 574 extends 360 degrees about the centerline of thigh portions 548. In other implementations, tethers 574 comprise multiple individual connectors spaced from one another about the centerlines of thigh portion 548-1 and 548-2. In some implementations, tethers 574 do not releasably connect upper leg grips 528 to garment 524 but form a more permanent fixed connection between upper leg grips 528 and garment 524.

Tethers 574 flexibly or movably suspend upper leg grip 528 from garment 524 within the respective thigh portion 548. Said another way, each of tethers 574 permits relative movement of the associated upper leg grip 528 with respect to the associated thigh portion 548. Tethers 574 facilitate inward spacing of upper leg grips 528 from the interior sides of thigh portions 548. As result, air flow passages are provided between the exteriors of upper leg grips 528 and the interior of thigh portions 548. In addition, the side of the person wearing garment 524 is less constricted. In implementations where upper leg grips 528 are adjustable to provide various user selectable sizes or degrees of constriction, upper leg grip carriers 528 permit upper leg grips 528 to be constricted with less or without inward movement or constriction of thigh portions 548-1, maintaining the outward appearance of thigh portions 548. In some implementations, tethers 574 have a length (as measured in a direction parallel to the logical centerline of the panel leg) of at least 1 inch and in some implementations at least 2 inches.

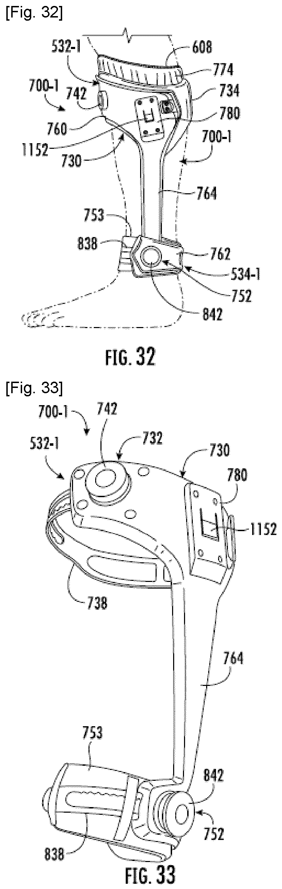

Figures 32-43 illustrate lower leg gripping unit 700-1 which provides lower leg grip 532-1 and ankle grip 534-1. Figure 32 illustrates the lower leg gripping unit 700-1 positioned on the left lower leg of a person wearing exosuit 520. As should be appreciated, exosuit 520 may likewise include a lower leg gripping unit 700-2 (shown in Figure 22) which is similar to unit 700-1 except that unit 700-2 is configured for being positioned on the right lower leg of a person wearing exosuit 520.

Each of units 700-1 and 700-2 comprises an outer skeleton 730, lower leg constriction adjuster 732, lower leg inner cushion 734, lower leg tether 774, and lower leg link connection interface 780, ankle constriction adjuster 752, and ankle inner cushion 753. Outer skeleton 730, sometimes referred to as the "hard cuff", serves as a backbone or spine for the lower leg grip 532 and ankle grip 534, providing a structural support for the lower leg grip 532 and ankle grip 534 while being sufficiently flexible to facilitate wrapping of the leg grip about the person's leg. Outer skeleton 730 comprises a shank portion 760 and a lower ankle portion 762 which are interconnected by intermediate post 764. In the example illustrated, shank portion 760 is suspended from garment 524 within the lower portion of the pants layer garment 524 by tether 774. Tether 774 comprises the above-described connector 608 which secures tether 774 to lower leg grip carrier 527 (described above). Post 764 suspends lower ankle portion 762 from shank portion 760.

In the example illustrated, shank portion 760, lower ankle portion 762 and post 764 are integrally formed as part of a single unitary body from a material such as a fiber composite, such as a carbon fiber composite material. In other implementations, shank portion 760, lower ankle portion 762 and post 764 may be formed from other materials. In other implementations, post 764 may be releasably connected to one or both of shank portion 760 and lower ankle portion 762.

Figures 33-35B illustrate unit 700-1 without lower leg inner cushion 734 and without lower leg tether 774. As shown by such figures, shank portion 760 is similar in many respects with respect to outer skeleton 630 of upper leg grip 528. Shank portion 760 comprises a rigid, but flexible outer housing or support for supporting constriction adjuster 732 and lower leg link connection interface 780.

Constriction adjuster 732 facilitates selective adjustment to the inner diameter of the generally circular or oval cuff formed by outer skeleton 730 and inner cushion 734. Constriction adjuster 632 adjusts the interior diameter by adjusting the length of inner cushion 734. Constriction adjuster 732 comprises connector 736, flexible strap 738, pinion gear 740 and dial 742.

Connector 736 comprising a mechanism coupled to outer skeleton 730 and configured to be releasably connected to an end portion of strap7. In the example illustrated, strap 738 comprises an opening or aperture 744 sized and shaped so as to receive connector 736 which has a neck supporting a larger head, wherein the head may be passed through aperture 744, capturing the end of strap 738 about the neck. In other implementations, the end of the strap 738 and the connector 736 may have other configurations to facilitate releasable connection of the end of the strap 738 to the outer skeleton 730. For example, in some implementations, a quick release buckle may be utilized.

Flexible strap 738 comprises an elongate strap formed from a material or dimensioned so as to be bendable to wrap about the shank of the person wearing exosuit 520. In some implementations, the flexible strap 738 may be formed from a polymer material. In addition to aperture 744, flexible strap 638 comprises a slot 746 bordered on one side by a roll or rack of teeth 748. As shown may Figure 26, slot 746 receives pinion gear 740 with teeth 748 being engaged by pinion gear 740.

Pinion gear 740 comprises a generally circular disk having a peripheral edge provided with teeth and intermesh with the teeth 748 along slot 746. Dial 742 serves as a manual interface rotating pinion gear 740. In some implementations, dial 742 is directly connected to pinion gear 740. In other implementations, dial 742 may be connected to pinion gear 740 by intermediate gear train. Dial 742 is configured to project through or otherwise be accessible through opening 651 of garment 524. Manual rotation of dial 742 results in rotation of pinion gear 740 to translate strap 738, adjusting and extent of the length of strap 738 extending beyond shank portion 760 of outer skeleton 730, thereby adjusting the inner diameter of lower leg grip 532.

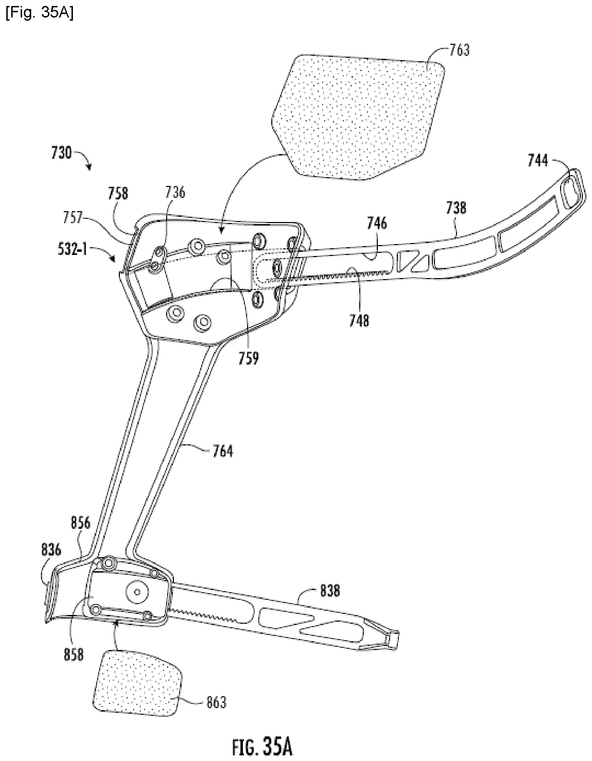

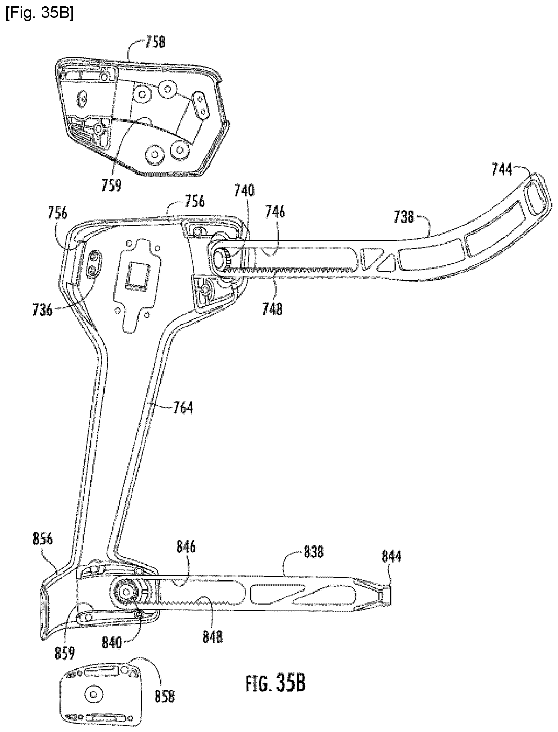

As further shown by Figures 35A and 35B, outer skeleton 730 comprises connection panel 756 and cover panel 758. Connection panel 656 supports pinion gear 740, dial 742 and any geartrain therebetween. Connection panel 756 further supports lower leg link connection interface 780. Connection panel 756 cooperatively mates with cover panel 758 to receive portions of strap 738 therebetween. As shown by Figures 35A and 35B, panels 756 and 758 cooperate to form an opening 757 through which the end of strap 738 may pass for positioning aperture 744 over connector 736.

In addition, panels 756 and 758 further cooperate to form an interior guide 759 in the form of an internal channel for guiding the translation of strap 738 between panels 756 and 758 in response to rotation of dial 742 and pinion gear 740. As shown by Figure 35A, the inner side facing surface of panel 758 may have connectors 763 for releasably connecting to inner cushion 734. In some implementations, connector 763 may comprise one or more patches of hook and loop fastener arrangement, wherein a first set of patches providing a first portion of a hook and loop fastener arrangement releasably connects to a second patch providing a second portion of the hook and loop fastener arrangement which is secured to inner cushion 734. In other implementations, other connectors for releasable connection to the cushion 734 may be provided on panel 758 or otherwise provided by skeleton 730.

Lower ankle portion 762 is similar in many respects with respect to outer skeleton 630 of upper leg grip 528. Shank portion 760 comprises an incompressible, but flexible outer housing or support for supporting constriction adjuster 832.

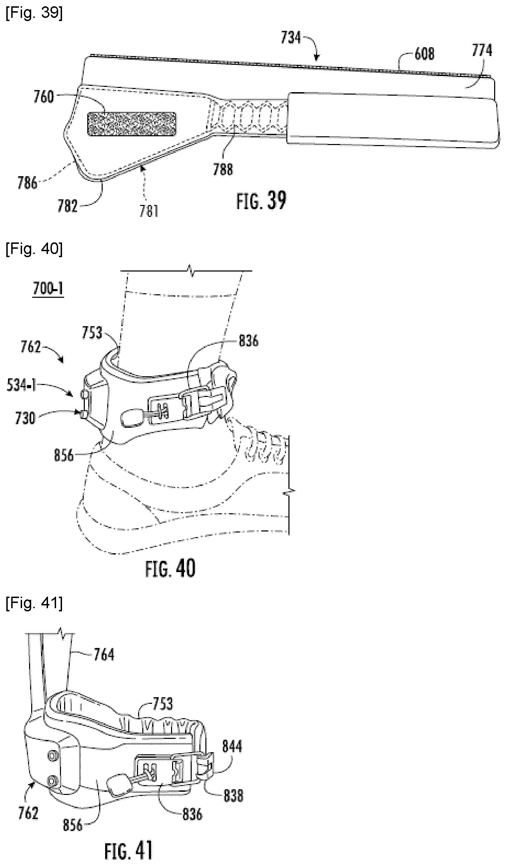

Constriction adjuster 752 facilitates selective adjustment to the inner diameter of the generally circular or oval cuff formed by outer skeleton 830 and inner cushion 753. Constriction adjuster 752 adjusts the interior diameter by adjusting the length of inner cushion 753. Constriction adjuster 752 comprises connector 836 (shown in Figures 40 and 41), flexible strap 838, pinion gear 840 and dial 842.

Connector 836 comprising a mechanism coupled to outer skeleton 730 and configured to be releasably connected to an end portion of strap 838. In the example illustrated, strap 838 comprises hook 844 sized and shaped so as to engage connector 836. In the example illustrated, connector 836 comprises a commercially available Fidlock^{®} connector. In other implementations, the end of the strap 838 and the connector 836 may have other configurations to facilitate releasable connection of the end of the strap 838 to the lower ankle portion 76 of unit 700-1 providing ankle grip 534-1. For example, in some implementations, a quick release buckle may be utilized.

Flexible strap 838 comprises an elongate strap for from a material or dimensioned so as to be bendable to wrap about the ankle of the person wearing exosuit 520. In some implementations, the flexible strap 838 may be formed from a polymer material. In addition to hook 844, flexible strap 838 comprises a slot 846 bordered on one side by a row or rack of teeth 848. As shown by Figure 35B, slot 846 receives pinion gear 840 with teeth 848 being engaged by pinion gear 840.

Pinion gear 840 comprises a generally circular disk having a peripheral edge provided with teeth that intermesh with the teeth 848 along slot 846. Dial 842 serves as a manual interface for rotating pinion gear 840. In some implementations, dial 842 is directly connected to pinion gear 840. In other implementations, dial 842 may be connected to pinion gear 840 by intermediate gear train. Dial 842 is configured to project through or otherwise be accessible with the parting or separation of slit 653. Manual rotation of dial 842 results in rotation of pinion gear 840 to translate strap 838, adjusting and extent of the length of strap 838 extending beyond ankle portion 762 of outer skeleton 730, thereby adjusting the inner diameter ankle grip 534.

As further shown by Figures 35A and 35B, ankle portion 762 of outer skeleton 730 comprises connection panel 856 and cover panel 858. Connection panel 856 supports pinion gear 840, dial 842 and any geartrain therebetween. Connection panel 856 cooperatively mates with cover panel 858 to receive portions of strap 738 therebetween. As shown by Figures 35A and 35B, panels 856 and 858 cooperate to form an interior guide 859 in the form of an internal channel for guiding the translation of strap 838 between panels 856 and 858 in response to rotation of dial 842 and pinion gear 840. As shown by Figure 35A, the inner side facing surface of panel 858 may have connectors 863 for releasably connecting to inner cushion 753. In some implementations, connector 863 may comprise one or more patches of hook and loop fastener arrangement, wherein a first set of patches providing a first portion of a hook and loop fastener arrangement releasably connects to a second patch providing a second portion of the hook and loop fastener arrangement which is secured to inner cushion 753. In other implementations, other connectors for releasable connection to the cushion 753 may be provided on panel 858 or otherwise provided by skeleton 730.

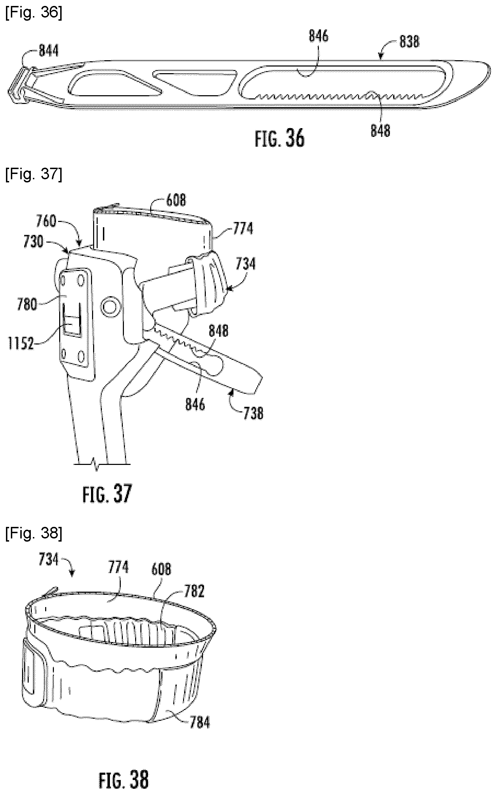

Figures 37-39 illustrate inner cushion 734 and tether 774. Figure 37 illustrate inner cushion 734 secured to the shank portion 76 skeleton 730 and further illustrates strap 738 extending from cushion 734 and tether 774 extending from cushion 734. Figure 38 illustrates cushion 734 and tether 774 independent from skeleton 730 and strap 738. Figure 39 illustrates cushion 734 and tether 774 in a flattened state.

Cushion 734 provides a layer of cushioning between shank portion 760 of skeleton 730 and the person's shank. Inner cushion 734 further wraps about the person's shank to facilitate gripping of the person's shank and securement of the person's shank to skeleton 730 and the connected MAL 540. Inner cushion 734 is similar to inner cushion 634 described above. Inner cushion 734 comprises a compressible core pad 781, outer elastic enclosure 782, and strap guide 784.

As shown by Figure 39, compressible core pad 781 comprises a single integral unitary body foam construction comprising skeleton pad 786 and accordion 788. Pad 786 is configured to overlay skeleton 730, extending between skeleton 730 and the person's shank. Pad 786 may be shaped and sized so as to cover or extend outwardly beyond majority, if not all, of the entire perimeter of skeleton 730.

Accordion 788 extends from pad 786, wherein the total length of pad 786 and accordion 788 is sufficient to wrap about the shank of a person wearing exosuit 520. In one implementation, this total length is at least 10 inches. Accordion 788 is formed from multiple accordion segments (a series of extendable and compressible diamond-shaped segments), facilitating the linear change in length of accordion 788 to accommodate different degrees of constriction about the person's shank resulting from the repositioning of strap 738 by in response to rotation of dial 742.

Outer elastic enclosure 782 extends at least about accordion 788 and in the example illustrated, extends about or encloses both pad 786 and accordion 788. Outer elastic enclosure 782 may be formed from an elastic material, such as an elastic fabric. The elastic material accommodates the stretching of accordion 788. In some implementations, enclosure 782 may be omitted.

As shown by Figure 39, one face of pad 786 includes a portion of connector 763 on those portions of the outer elastic enclosure 782 that covers pad 786. In particular, the portion 760 on pad 786 may be one of hooks and loops of a hook and loop fastener arrangement, wherein the face of panel 758 of shank portion 760 may include the other of hooks and loops of the hook and loop fastener arrangement. As result, cushion 734 may be secured to skeleton 730 which is, in turn, connected to strap 738 and MAL 540 via interface 780. In other implementations, portion 760 may comprise a series of snaps or other releasable fastening mechanisms.

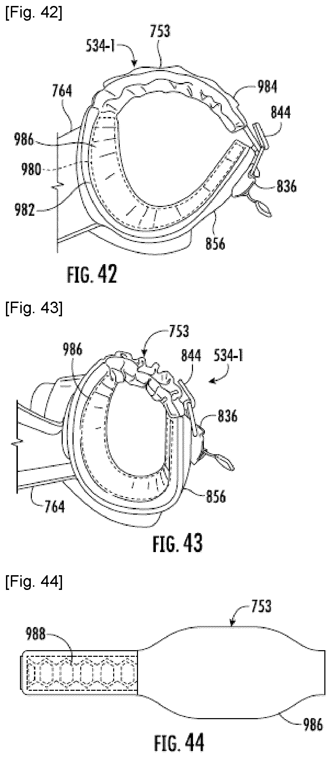

Figures 32-36 and 40-43 illustrate ankle cushion 753. Figure 40 illustrates ankle cushion 753 secured to ankle portion 762 of skeleton 730 to form ankle grip 534-1. Figure 41 illustrates the generally C-shaped cushion 753 secured in a closed state by connector 836 and hook 844 of strap 838. Figure 42 illustrates ankle grip 534-1 in a first state having a first internal diameter. Figure 43 illustrates ankle grip 534-1 and a second having a second internal diameter less than the first internal diameter. The smaller internal diameter shown in Figure 43 is achieved by the rotation of dial 842 so as to draw strap 838 further into the space between overlapping panels 856 and 858.

Ankle cushion 753 is similar to lower leg inner cushion 734. Cushion 753 provides a layer of cushioning between ankle portion 762 of skeleton 730 and the person's ankle. Inner cushion 753 further wraps about the person's ankle to facilitate gripping of the person's ankle and securement of the person's ankle to skeleton 730 and the connected MAL 540. Inner cushion 753 is similar to inner cushion 634 described above. Inner cushion 753 comprises compressible core pad 980 and outer elastic enclosure 982.

As shown by Figure 42, compressible core pad 980 comprises a single integral unitary body foam construction comprising skeleton pad 986 and accordion 988. Pad 986 is configured to overlay ankle portion 762 of skeleton 730, extending between ankle portion 762 and the person's ankle. Pad 986 may be shaped and sized so as to cover or extend outwardly beyond majority if not all of the entire perimeter of ankle portion 962.

Accordion 988 extends from pad 986, wherein the total length of pad 986 and accordion 988 is sufficient to wrap about the ankle of a person wearing exosuit 520. In one implementation, this total length is at least 6 inches. Accordion 988 is formed from multiple accordion segments (a series of extendable and compressible diamond-shaped segments), facilitating the linear change in length of accordion 988 to accommodate different degrees of constriction about the person's shank resulting from the repositioning of strap 938 by in response to rotation of dial 842.

Outer elastic enclosure 982 extends at least about accordion 988 and in the example illustrated, extends about or encloses both pad 986 and accordion 988. Outer elastic enclosure 982 may be formed from an elastic material, such as an elastic fabric. The elastic material accommodates the stretching of accordion 988. In some implementations, enclosure 982 may be omitted.

In the example illustrated, the upper leg grips 528 each have an adjustable inner circumference (the inner surface to contact the leg) of at least 45 cm and up to 64 cm, having a 19 cm range. In some implementations, the upper leg grip 528, one size for a smaller individual, may have an adjustable inner circumference of at least 43 cm and up to 62 cm, also providing a 19 cm range of adjustment. In the example illustrated, the lower leg grips 532 having an adjustable inner circumference of at least 29 cm and up to 45 cm, providing a 16 cm range of adjustment. In the example illustrated, the ankle grip 534 has an adjustable inner circumference of at least 20 cm and up to 27 cm, providing a 7 cm range of adjustment. In other implementations, the extent of the adjustment ranges, the upper and lower inner values of the ranges of inner circumferences may have other values.

As shown by Figures 17, 18 and 23, MAL 540 extends along an exterior side of the garment and releasably connects to the leg grips 528 and 532 through apertures in the garment 524. The MAL 540 is located along a lateral side of the person's legs, extending from above to below the knee. The example MALs 540 provide powered motion or augmentation of the upper and lower leg of the person wearing the exosuit. The example MALs 540 each comprises a powered actuator 1052, an upper link 1054 (sometimes referred to as a thigh link) and a lower link 1056 (sometimes referred to as a shank link). The powered actuator 1052 is configured to generally positioned proximate to a person's knees and is configured to pivot the upper link 1040 and the lower link 1056 about an axis 1058 proximate the knee. In some implementations, the powered actuator 1052 may be in the form of an electric motor and a geared transmission. In some implementations, the powered actuator 1052 may be in the form of a pump which outputs pressurized fluid (a liquid or gas) for hydraulically/pneumatically pivoting the upper link and the lower link.

As discussed above, skeleton 630 comprises connection interface 580 which is utilized to interconnect upper leg grip 528 to upper leg link 1054. As shown by Figure 27B, connection interface 580 comprises a frame 1098 secured to skeleton 630 about an opening so as to form an overhanging rim 1100.

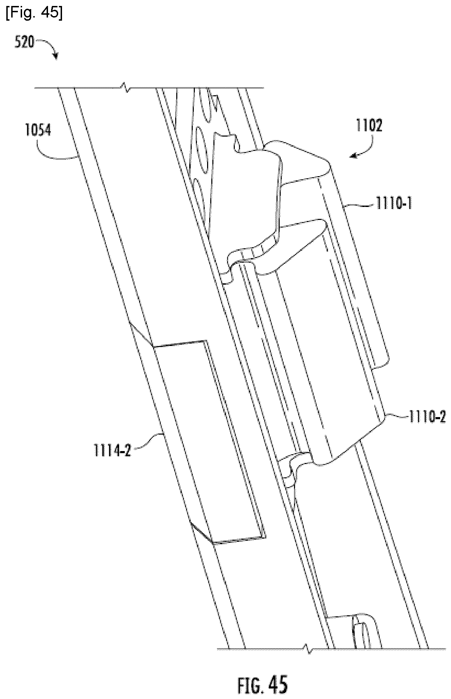

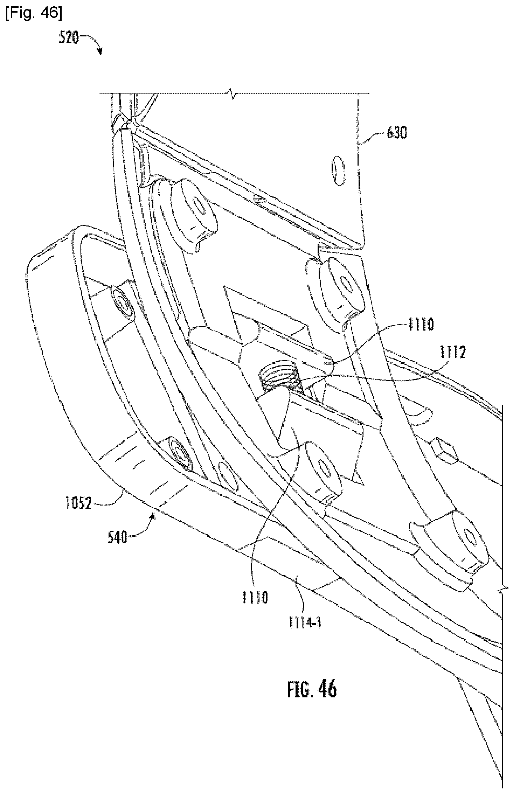

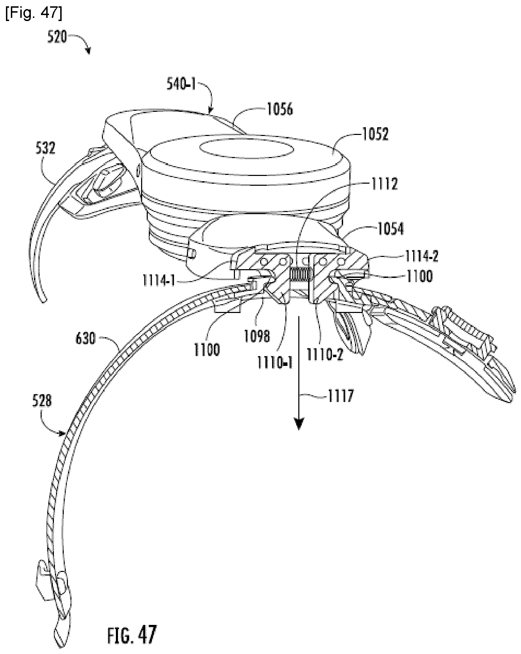

Figures 45-47 illustrate upper leg link connection interface 1102 and how it interacts with the overhanging rim 1100 of connection interface 580 to releasably secure the upper leg link 1054 to the upper leg grip 528 through garment 524. Upper leg link connection interface 1102 comprises oppositely facing hooks 1110-1, 1110-2 (collectively referred to as hooks 1110). Hooks 1110 are resiliently biased in opposite directions away from one another. In the example illustrated, as shown by Figure 46, hooks 1110 are resiliently biased by an intermediate compression spring 1112 (shown in Figs. 46 and 47) captured therebetween. Each of hooks 1110 is operably coupled to a corresponding pushbutton 1114.

As shown by Figure 47, movement of upper leg link 1054 in the direction indicated by arrow 1117 results in hooks 1110 being driven or moved towards one another, compressing the compression spring 1112 therebetween. Upon hooks 1110 being moved past the rim 1100, the compression spring 1112 moves hooks 1110 outwardly away from one another, capturing the rim 1100 within the notch of the hooks 1110. This results in upper link 1054 "popping" into place, retaining upper leg link 1054 in place, connected to skeleton 630 of upper leg grip 528.

When a user wishes to disconnect upper link 1054 from upper leg grip 528, the user may manually squeezes pushbuttons 1114towards one another so as to compress compression spring 1112, withdrawing rim 1100 out of engagement with hooks 1110 and permitting upper link 1054 to be lifted in a direction opposite to that of arrow 1117 out of the window formed by frame 1098. Once the hooks 1110 have been withdrawn from the window formed by frame 1098, the pushbuttons 1114 may be released, wherein spring 1112 once again returns hooks to the original default state, ready for subsequent reinsertion through the window formed by frame 1098 when upper link 1054 is to be reconnected to the upper leg grip 528.

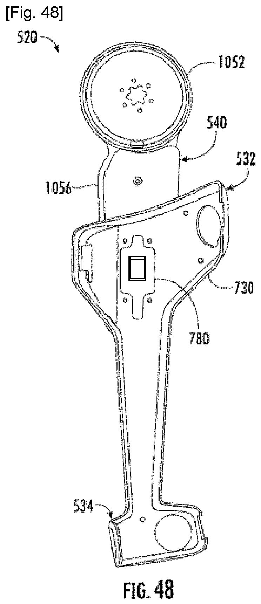

Figures 48-54 illustrate connection interface 780 supported by the shank portion of skeleton 730. As shown by Figure 48, connection interface 780 comprises a piece attached to skeleton 730 by one or more fasteners. As result, connection interface 780 may be more easily formed from material distinct from the material forming skeleton 730, facilitating use of one or more materials that provide portions of interface seven 1382 resiliently bend or flex for connection with connection interface 1150 and further facilitating use of different materials that may be more suited for the load function of connection interface 780. In other implementations, interface 780 may be permanently fastened to or integrally formed as part of skeleton 730.

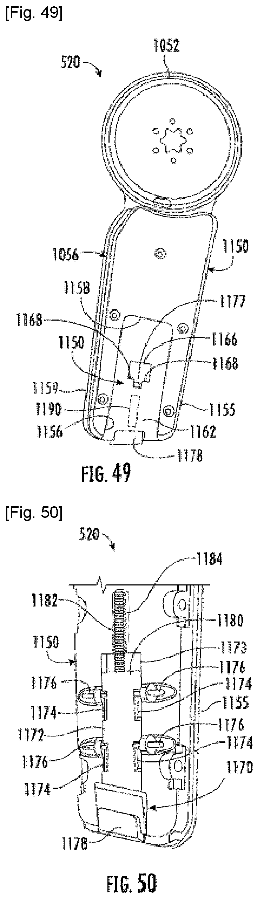

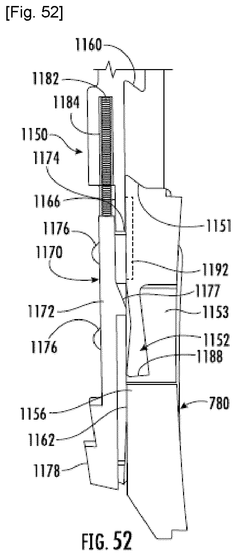

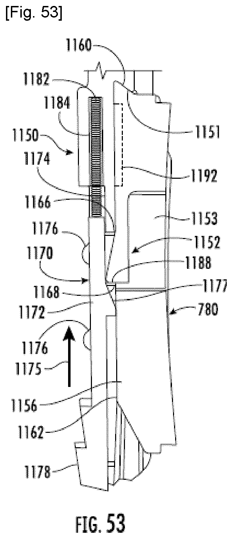

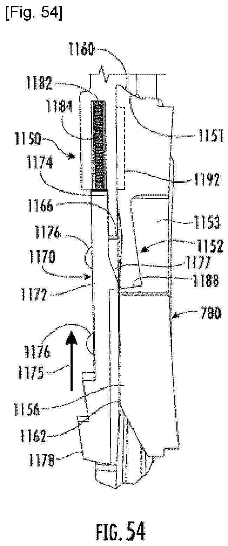

Connection interface 780 is configured to releasably connect to lower leg link connection interface 1150 of the lower link 1056 such that mechanical force may be transmitted from the lower leg link 1056 to the lower leg grip unit 700. In the example illustrated, connection interface 780 and connection interface 1150 are configured to be releasably connected to one another in response to a downward sliding motion (a motion parallel to the centerline of the leg of the person wearing garment 524) of lower leg link 1050 relative to the lower leg grip unit 700. As shown by Figures 52-54, connection interface 780 comprises an upwardly angled catch 1151 and a resiliently deformable or bendable catch or hook 1152.Connection interface 1150 is connected to lower link 1056. In the example illustrated, connection interface 1150 comprises an assembly which is mounted or otherwise joined to an outer plate 1159 of lower link 1056. Figure 49 illustrates the first face of connection interface 1150 joined to plate 1159. Figure 54 illustrates connection interface 1150 separated from plate 1159 to reveal features on a second face of connection interface 1150 that would otherwise be concealed by plate 1159. As shown by Figure 49, connection interface 1150 comprises a base plate 1155 having an elongate channel 1156 extending upwardly from a lower end of base plate 1155 and terminating at an upper edge 1158 which has an undercut 1160 (shown in Figure 53). Channel 1156 comprises a floor 1162 surrounding a cavity 1166 having a lower edge 1168.

As further shown by Figure 50, connection interface 1150 additionally comprises connection release 1170. Connection release 1170 comprises a bar 1172 slidably captured an interior channel 1173 formed in plate 1155. Bar 1172 comprises sidetracks 1174 on opposite sides which slidably receive pins 1176. Pins 1176 are secured to plate 1155 on opposite sides of bar 1172 and project into tracks 1174 to further assist in capturing and retaining bar 1170 within channel 1173. As result, connection interface 1150 may be assembled and held together by itself as a unit or component independent of plate 1159. In other implementations, tracks 1173 and pins 1176 may be omitted, where plate 1159 captures and assists in retaining bar 1172 within channel 1173. In still other implementations, plate 1155 and bar 1172 may have a cooperating tongue and groove relationship to slidably retain bar 1172 for movement within channel 1173 or may comprise other structures to slidably capture bar 1172 along plate 1155.

As shown by Figures 49 and 53, bar 1170 comprises a release ramp 1177 configured to engage in press against hook 1152 when bar 1172 is slid in an upward direction as indicated by arrow 1175. As shown by Figure 50, bar 1172 has a lower end forming a handle 1178 and an upper edge 1180 which bears against a compression spring 1182. Compression spring 1182 is partially contained within a rearward interior tube, detent or channel 1184 formed in the interior side of plate 1155. Spring 1182 resiliently biases bar 1172 in a downward direction.

Figures 52-54 illustrate the connection and disconnection of connection interfaces 780 and 1150. As shown by Figure 52, to connect lower links 1056 to lower leg grip 532 and connection interface 780, lower leg link 1056 (shown in Figure 49) and connection interface 1150 (shown in Figure 52) are lowered while being pressed against connection interface 780 with connection interface 780 being aligned with and sliding upward into channel 1156. As connection interface 1150 is being slid and lowered against connection interface 780, floor 1162 presses against hook 1152 to resiliently bend hook 1152 into its underlying cavity 1153.

As shown by Figure 53, connection interface 1150 is lowered until undercut 1160 receives catch 1151. At such time, hook 1152 registers with cavity 1166, permitting hook 1152 to resiliently return to its original shape, extending into cavity 1166 such that edge 1188 of hook 1152 opposes lower edge 1168 of cavity 1166. As result, connection interfaces 780 and 1152 are mechanically interlocked in all directions. Channel 1156 engages the opposite sides of connection interface 780 to mechanically inhibit relative sideways movement of connection interfaces 780 and 1150. The inter-engagement of catch 1151 and undercut 1160 prevents further downward movement of connection interface 1150 relative to connection interface 780. The interaction of edge 1188 and edge 1168 inhibit upward movement of connection interface 1150 relative to connection interface 780 and further inhibit pivoting of connection interface 1150 away from connection interface 780 to withdraw hook 1152 from cavity 1166.

As shown by Figure 54, connection interface 1150 may be released or disengaged from connection interface 780 to facilitate separation and withdrawal of lower link 56 from lower leg grip 532 by a person engaging handle 1178 and upwardly pushing bar 1172 within channel 1173 against the bias offered by spring 1182. Such upward movement results in release ramp 1177 being moved upwardly into engagement with hook 1152 to bend hook 1152 out of cavity 1166 and further into cavity 1153 such that surfaces 1168 and 1188 no longer oppose one another. As a result, connection interface 1150 (and MAL lower link 1056) may be pivoted in a clockwise direction (as seen in Figure 54) away from connection interface 780 and raise to withdraw catch 1151 from undercut 1160, separating lower link 1056 from lower leg grip 532.

As shown by broken lines in Figure 49 and 53, connection interface 1150 may additionally comprise one of a magnet or a magnet attracting (e.g. ferrous) insert 1190 while connection interface 780 comprises the other of magnet attracting or a magnet insert 1192. Insert 1190 may be aligned with a center point along channel 1156. Inserts 1190 and 1192 cooperate to facilitate easier alignment of connection interfaces 780 and 1150. In other implementations, such inserts may have other configurations or locations for magnetically assisting the alignment of connection interfaces 780 and 1150 when they are being joined. In yet other implementations, such inserts may be omitted.

The example construction of connection interfaces 580, 1102 and connection interfaces 780, 1150 provide easier, tool less connection and disconnection of the MAL 540 and the leg grips 528, units 700. To connect the MAL 542 a corresponding set of leg grip 528 and leg grip unit 700, the person wearing exosuit 520 first slides lower leg link 1050 downward along the exterior garment 524 while pressing lower leg link 1050 against the side of his or her legs, hook 1152 registers within cavity 1166 catch 1151 is received by undercut 1160. Once this connection is made, the person simply aligned hooks 1110 with window 1098 and presses connection interface 1102 against his or her leg until the hooks pop into window 1098, catching upon overhang 1100. Such connection requires no tools and may be quickly performed with little bending required of the person donning MAL 540.

Should a person wish to remove MAL 540, the person may simply depress or squeeze pushbuttons 1114 towards one another to disengage hooks 1110 from the collar or overhang 1100 and pull hooks 1110 out of window 1098. Thereafter, the person may simply raise handle 1178 to disengage hook 1152 from cavity 1166, permitting lower link 1056 to be withdrawn and separated from lower leg grip unit 700. Upon removal of MAL 540, the person may additionally cover the apertures 550, 650 and the openings 551, 651 with the above-described cover panels 680, 681, 690 and 691, respectively. The upper leg grip 528 and the lower leg grip unit 700 may remain in place within the pant leg of the garment 524.

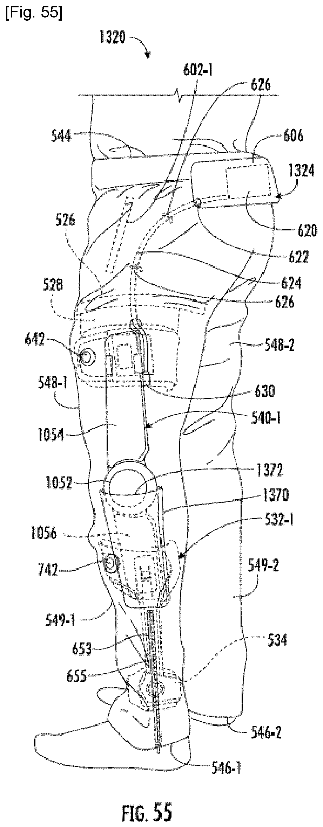

Figure 55 illustrates portions of an example exosuit 1320. Exosuit 1320 is similar to exosuit 520 described above except that exosuit 1320 comprises exosuit garment 1324. Exosuit garment 1324 is similar to exosuit garment 524 (or exosuit garment 524') except that exosuit garment 1324 additionally comprises lower MAL pocket 1370. Those remaining components of exosuit 1320 which correspond to components of exosuit 520 are numbered similarly and/or are shown and described above the other figures illustrating exosuit 520.

MAL pocket 1370 comprises a pocket on the exterior of the lower leg portion of garment 1324, wherein pocket 1370 has an upwardly facing mouth 1372. Pocket 1370 and mouth 1372 are sized and located so as to receive at least portions of link 1056 of MAL 540 when link 1056 is attached to lower leg grip 532-1. Pocket 1370 extends over and is aligned with aperture 650 without covering opening 651. In some implementations, pocket 1370 may be formed from the same fabric or other material forming the pant leg of garment 1324. In some implementations, pocket 1370 may be formed from an elastic material. Pocket 1370 conceals and covers lower link 1056. In addition, pocket 1370 may assist in guiding the movement of lower link 1056 into connection with the lower leg grip 532-1. In some implementations, mouth 1372 may be retained in a closed state by a zipper, hook and loop fastener, button or the like for times when MAL 540 is not being used and is not connected to the upper and lower leg grips.

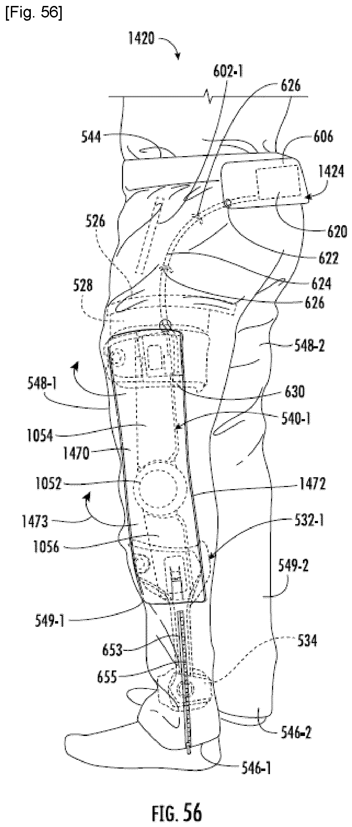

Figure 56 illustrates portions of an example exosuit 1420. Exosuit 1420 is similar to exosuit 520 described above except that exosuit 1420 comprises exosuit garment 1424. Exosuit garment 1424 is similar to exosuit garment 524 (or exosuit garment 524') except that exosuit garment 1424 additionally comprises MAL cover panel 1470. Those remaining components of exosuit 1420 which correspond to components of exosuit 520 are numbered similarly and/or are shown and described above the other figures illustrating exosuit 520.

MAL cover panel 1470 comprises a hinged panel on the exterior of garment 1324, wherein cover panel 1470 is sized and located so as to extend over and cover MAL 540 while it is secured to the upper and lower leg grips. In some implementations, cover panel 1470 may be opaque so as to conceal MAL 540. In yet other implementations, cover panel 1470 may be transparent. Cover panel 1470 may be imperforate or water impermeable to protect MAL 540 from weather elements.

As indicated by arrow 1473, cover panel 1470 may be drawn or pulled away from the remainder of garment 1424 to expose MAL 540 for when MAL 540 needs to be adjusted, or removed. Cover panel 1470 may be secured in the extended or covered state shown in Figure 56 by one or more covers retainers 1472. In the example illustrated, cover retainers 1472 may be formed by a cooperating hook and loop fastener arrangement disposed on opposing surfaces of cover panel 1470 and corresponding surfaces of the leg portion of garment 1424. In other implementations, retainer 1472 may be in the form of a zipper, buckles, snaps or the like.

Although cover panel 1470 is illustrated as extending from an integral flexible hinge along a front side of MAL 540 and a front side of openings 551 and 651, in other implementations, cover panel 1470 may extend from an integral flexible hinge along a rear side of MAL 540 and a rear side of openings 551 and 651. In some implementations, rather than hanging from or being fixed to the rest of garment 1424 by the flexible hinge, cover panel 1470 may be completely separable from the remainder of garment 1424. In such implementations, cover panel 1470 may be releasably secured to the exterior of garment 1424 by hook and loop fastener arrangements, buttons, snaps, buckles or the like.

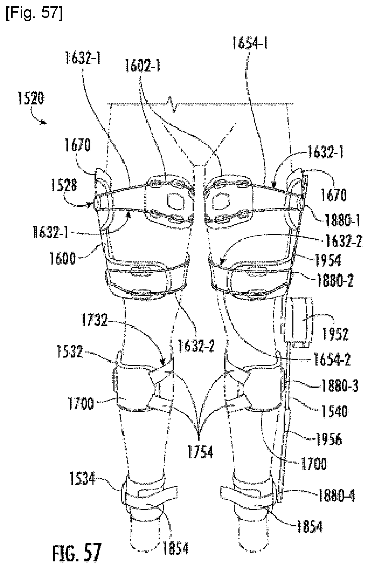

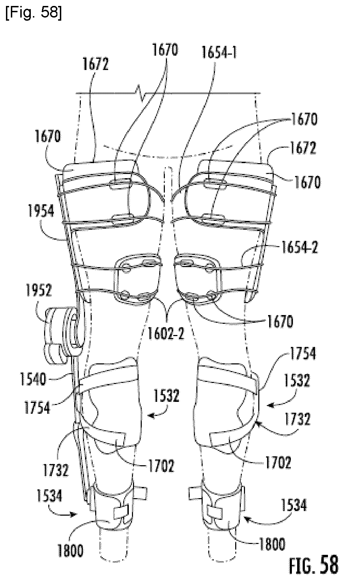

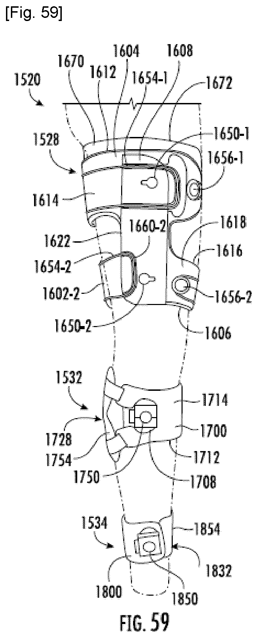

Figures 57-61 illustrate portions of an example exosuit 1520. Exosuit 1520 comprises upper leg grips 1528, lower leg grips 1532 and ankle grips 1534. Exosuit 1520 further comprises MALs 1540, one MAL 1540 for each leg. Only the left side MAL 1540 is illustrated for purposes of illustration. Lastly, exosuit 1520 comprises a garment (pants) such as garment 24, 524, 524', 1324 or 1424 as described above and depicted in the associated figures. As with exosuits 520, 1320 and 1420, the MALs 1540 are connected to the interior leg grips 1528, 5032 and 1534 by connection interfaces that pass-through openings, apertures or slits in the garment 24, 524, or 524'.

Each of upper leg grip 1532 comprises an outer piece 1600, inner piece 1602, upper constriction adjuster 1632-1 and lower constriction adjuster 1632-2. Outer piece 1600 is configured to wrap about a majority of the thigh and comprises an upper ring 1604, a lower ring 1606 and an outer spine 1608. Upper ring 1604 is configured to wrap across a rear of a person's thigh and terminate at spaced apart ends generally along the front of the person's thigh. Upper ring 1604 comprises an inner padded portion 1612 and an outer shell 1614. Inner padded portion 1612 is formed from a compressible material, such as a foam material. Outer shell 1614 comprises a layer of a material harder than that of inner padded portion 1612. In some implementations, outer shell 1614 may be laminated over or coated upon inner padded portion 1612. Outer shell 1614 facilitates sliding of flexible lines of upper constrictor adjuster 1632-1 along the outer surface of upper ring 1604 and provides load transfer to spine 1608.

Lower ring 1606 is configured to wrap across a front of a person's thighs and terminates at spaced apart ends near the rear or outer sides of the person's thighs. As with upper ring 1604, lower ring 1606 comprises an inner padded portion 1616 and an outer skin or shell 1618. Inner padded portion 1616 is formed from a compressible material, such as a foam material. Outer shell 1618 comprises a layer of a material harder than that of inner padded portion 1616. In some implementations, outer shell 1618 may be laminated over or coated upon inner padded portion 1616. Outer shell 1618 facilitates sliding of flexible lines of lower constrictor adjuster 1632-2 along the outer surface of lower ring 1606 and provides load transfer to spine 1608.

Spine 1608 comprises a rigid bar, post or other structure extending between and interconnecting upper ring 1604 and lower ring 1606. Spine 1608 is formed a stronger more rigid material as compared to outer shell 1614 and 1618. In some implementations, spine 1608 may be formed from a fiber composite material, such as a carbon fiber composite material. Spine 1608 supports connection interface 1650-1 and lower connection interface 1650-2 (collectively referred to as connection interfaces 1650) and for facilitating load transfer between upper leg grip 1528 and the respective MAL 1540.

In the example illustrated, inner padded portion 1612 and inner padded portion 1616 are joined by an intermediate padded portion 1622 which underlies spine 1608 in regions between rings 1604 and 1606. In the example illustrated, padded portion 1612, 1616 and 1622 may be integrally formed as a single unitary body out of a one or more foam layers. In some implementations, outer shell 1614 and 1618 may likewise continuously extend over and across intermediate padded portion 1622, further underlying spine 1608.

Connection interfaces 1650 facilitate load transmitting connection of upper leg grip 1528 to an associated outer MAL 1540 through the garment. In the example illustrated, each connection interface 1650 comprise a keyhole having an enlarged head receiving opening and a narrow neck receiving slot extending from the head opening, wherein the MAL 1540 comprises a wider head initially received within the head opening, the head being supported by a neck that is slidably disposed within the narrow neck receiving slot upon insertion of the head into the head opening to connect the MAL 1540 to upper leg grip 1528. In other implementations, connection interfaces 1650 may alternatively have a configuration similar to those connection of patients described above with respect to exosuit 520.

Inner pieces 1602-1 comprise padded pieces configured to be located along the inner front portions of the person's thigh horizontally aligned with upper ring 1604. Inner pieces 1602-2 comprise padded pieces configured to be located along the inner rear portions of the person's thigh horizontally aligned with lower ring 1606. Inner pieces 1602 each have a configuration similar to that of rings 1604 and 1606. Inner pieces 1602 may each have an inner padded cushion layer one or more layers of foam material and an outer skin or shell harder and having a lower coefficient of friction than the cushioned layer to facilitate sliding or movement of flexible lines/cables of constriction adjusters 1632.

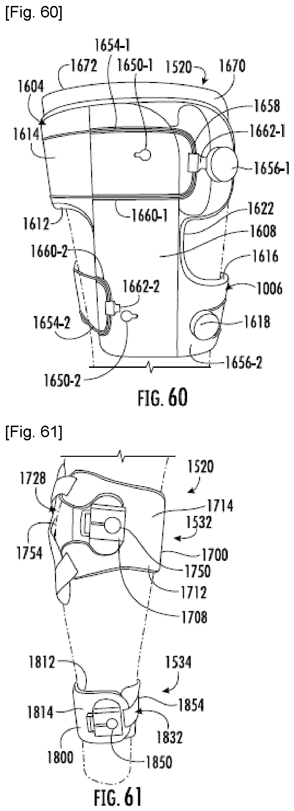

Constriction adjusters 1632 operate in similar fashions. Constriction adjuster 1632-1 comprises an elongate flexible line 1654-1 (cable or the like) having opposite ends secured to a rotatable winding spool or dial 1656-1 and an opposite looped end 1658-1 (shown in Figure 60) seated in an elongate groove 1660 provided in spine 1608. Rotation of the dial in one direction releases the flexible line to increase the free length of the flexible line 1654-1 while rotation of the dial in an opposite direction winds up the flexible line to reduce the free length of the flexible line. In the example illustrated, line 1654-1 is releasably retained within groove 1660-1 by a retention tab 1662-1. The retention tab 1662-1 may be resiliently flexible so as to move to a position not overlying groove 1660-1 to facilitate removal of line 1654-1 or may be snapped into place for withdrawal to facilitate removal of line 1654 from groove 1660-1. Withdrawal of line 1654-1 from groove 1660 may permit easier positioning of lowering 1606 about the person's thigh. Rotation of dial 1656-1 tightens or loosens line 1654-1 to adjust the inner diameter of ring 1604 to accommodate differently sized thighs.

Constriction adjuster 1632-2 comprises an elongate flexible line 1654-2 (cable or the like) having opposite ends secured to a rotatable winding dial spool 1656-2 and an opposite looped end 1658-2 (shown in Figure 60) seated in an elongate groove 1660-2 provided in spine 1608. Rotation of the dial in one direction releases the flexible line 1654-2 to increase the free length of the flexible line 1654-2 while rotation of the dial in an opposite direction winds up the flexible line to reduce the free length of the flexible line. In the example illustrated, line 1654-2 is releasably retained within groove 1660-2 by a retention tab 1662-2. The retention tab 1662-2 may be resiliently flexible so as to move to a position not overlying groove 1660-2 to facilitate removal of line 1654-2 or may be snapped into place for withdrawal to facilitate of line 1654 from groove 1660-2. Withdrawal of line 1654-2 from groove 1660-2 may permit easier positioning of lowering 1606 about the person's thigh. Rotation of dial 1656-2 tightens or loosens line 1654-2 to adjust the inner diameter of ring 1604 to accommodate differently sized thighs.

In some implementations, the dial 1656 may comprise a releasable ratchet for retaining the rotational position of the dial. In some implementations, the dial may comprise a resiliently biased pin received within one of a series of detents to retain the selected angular positioning of the dial. In some implementations, the dial may comprise BOA dials commercially available from Compass Diversified. In other implementations, ratchet dial may comprise other rotatable dials configured to wind the flexible line and selectively retain the flexible line in a selected degree of wrap winding about the dial to adjust a length of the flexible line between the dial and the looped end. In some implementations, exosuits 520, 1320 and 1420 may utilize the constriction adjuster 1632-1 in place of the disclosed constriction adjuster 632, replacing the strap and the pinion gear with the flexible lines, ratchet dial and groove of constriction adjuster 1632-1.

In the example illustrated, the flexible lines 1654-1 and 1654-2 are guided by rings or opposing detents to retain the rotational or angular position of the dial once wound to a particular state. In some implementations, the winding dials 1656 are provided on pieces 1616 and 1602. Although not illustrated, each of the pieces 1600 and 1602 may further be provided with an outer housing formed by a rigid polymer shield or an outer flexible polymer or fabric wrap. For example, in some implementations, the flexible lines 1654 extending between the edge portions of pieces 1600 and 1602 may be enclosed by an outer fabric or flexible polymer sleeve. The sleeve itself may be additionally provided with a layer of padding between the sleeve and the surface of the thigh. In some implementations, sleeve may additionally encompass piece 1600 and/or pieces 1602. In some implementations, pieces 1602 may be omitted.

As further shown by Figures 57-60, each of the upper rings 1604 may be provided with a flexible tether 1670 similar to tether 574 described above. The flexible tether 1670 may include a securement mechanism 1672, such as a zipper, hook and loop fastener, buttons, snaps or the like) for releasable securement of tether 1670 to carrier 526 of the garment 524, 524', garment 1324 or garment 1424 as described above. In some implementations, tethers 1670 and their connectors 1672 may be omitted.

Lower leg grip 1532 is configured to extend about the shank of the person wearing exosuit 1520. Lower leg grip 1532 comprises front piece 1700, rear piece 1702, spine 1708 and constriction adjuster 1732. Front piece 1700 extends around the front and sides of the shank, terminating at opposite ends along the rear of the shank. Front piece 1700 comprises inner cushion 1712 and outer skin or shell. Cushion 1712 and shell 1714 may have a composition and a configuration similar to that of cushion 1612 and outer shell 1614 described above.

Rear pieces 1702 comprise padded bendable or flexible panels configured to extend along the path of the person wearing exosuit 1520. Rear pieces 1702 are connected to front pieces 1700 by strap 1754 of constriction adjuster 1732.

Spine 1708 comprises a rigid structure affixed to an outer exterior side of front piece 1700 to provide load transfer between lower leg grip 1532 and MAL 1540. Spine 1708 forms or supports connection interface 1750. Connection interface 1750 comprise a socket or opening for remover receiving a ball or head extending from MAL 1540 and forming a connection interface of MAL 1540. In some implementations, a ball or head pops into interface 1750 in the form of a socket or opening. In other implementations, connection interface 1750 (and the corresponding mating connection interface of MAL 1540) may have a configuration similar to that described above with respect to connection interfaces of exosuit 520. In still other implementations, other connection interface configuration may be utilized for releasably connecting lower leg grip 1532 to MAL 1540.

Constriction adjuster 1732 comprises one or more straps 1754 extending between opposite end portions of piece 1700, and the straps have an adjustable length. In the example illustrated, straps 1754 are releasably connected to one or both of ends of front piece 1700 by a hook and loop fastener arrangement, providing straps 1754 with an adjustable length between the ends of piece 1700. In other implementations, straps 1754 may be secured to and portions of piece 1700 by other mechanisms that provide straps 1754 with an adjustable length such as a series of buttons or snaps, buckles and the like. In some implementations, constriction adjuster 1728 may have a configuration similar to that of constriction adjuster 1632 described above or constriction adjuster 632 described above.

Ankle grip 1534 is similar to lower leg grip 1532 except that ankle grip 1534 is configured and sized for wrapping about regions proximate to the ankle of the person wearing exosuit 1520. Ankle grip 1534 comprises front piece 1800, spine 1808 and constriction adjuster 1832. Front piece 1800 extends around the rear and sides of the leg above the ankle, terminating at opposite ends along the front of the ankle. Front piece 1800 comprises inner cushion 1812 and outer skin or shell. Cushion 1812 and shell 1814 may have a composition and a configuration similar to that of cushion 1612 and outer shell 1614 described above.

Spine 1808 comprises a rigid structure affixed to an outer exterior side of front piece 1800 to provide load transfer between ankle grip 1534 and MAL 1540. Spine 1808 forms or supports connection interface 1850. Connection interface 1850 comprise a socket or opening for remover receiving a ball or head extending from MAL 1540 and forming a connection interface of MAL 1540. In some implementations, a ball or head pops into connection interface 1750 in the form of an opening or socket. In other implementations, connection interface 1850 (and the corresponding mating connection interface of MAL 1540) may have a configuration similar to that described above with respect to connection interfaces of exosuit 520. In still other implementations, other connection interface configuration may be utilized for releasably connecting ankle grip 1534 to MAL 1540.

Constriction adjuster 1832 comprises one or more straps 1854 extending between opposite end portions of piece 1800, and the straps have an adjustable length. In the example illustrated, straps 1854 are releasably connected to one or both of ends of front piece 1800 by a hook and loop fastener arrangement, providing straps 1854 with an adjustable length between the ends of piece 1800. In other implementations, straps 1854 may be secured to end portions of piece 1800 by other mechanisms that provide straps 1854 with an adjustable length such as a series of buttons or snaps, buckles and the like. In some implementations, constriction adjuster 1832 may have a configuration similar to that of constriction adjuster 1632 described above or constriction adjuster 632 described above.

MAL 1540 extends along an exterior side of the garment and releasably connects to the leg grips 1528, 1532 and 1534 through openings in the garment 24. The MAL 1540 is located along a lateral side of the person's legs, extending from above to below the knee. The example MALs 1540 provide powered motion or augmentation of the upper and lower leg of the person wearing the exosuit. The example MALs 1540 each comprises a powered actuator 1952, an upper link 1954 and a lower link 1956. The powered actuator 1952 is configured to generally positioned proximate to a person's knees and is configured to pivot the upper link 1940 and the lower link 1956 about an axis proximate the knee. In some implementations, the powered actuator 1952 may be in the form of an electric motor and a geared transmission. In some implementations, the powered actuator 1952 may be in the form of a pump which outputs pressurized fluid (a liquid or gas) for hydraulically/pneumatically pivoting the upper link and the lower link.

MAL 1540 is similar to MAL 540 described above except that MAL 1540 is directly pivotably connected to upper leg grip 1528 at two locations and is pivotably connected to each of lower leg grip 1532 and ankle grip 1534. MAL 1540 comprises connection interfaces 1880-1, 1880-2, 1880-3 and 1880-4 for pivotal connection to upper and 1604, lowering 1606, lower leg grip 1532 and ankle grip 1534, respectively. Each of such connection interfaces 1880 may comprise an extending neck supporting a flat or bulbous head. The head is configured to be captured within a corresponding socket, opening or slot in the connection interface provided on the leg grips. As indicated above, in other implementations, MAL 1540 may be provided with connection interface having other configurations configured to correspondingly connect to the connection interface provided on the leg grips. In some implementations, the lower leg grip 1532 and the ankle grip 1534 may be connected by an intervening post or bar (as with lower leg grip 532 and ankle grip 534 described above). In such implementations, MAL 1540 may not be connected to ankle grip 1534 but may terminate at its connection with lower leg grip 1532.

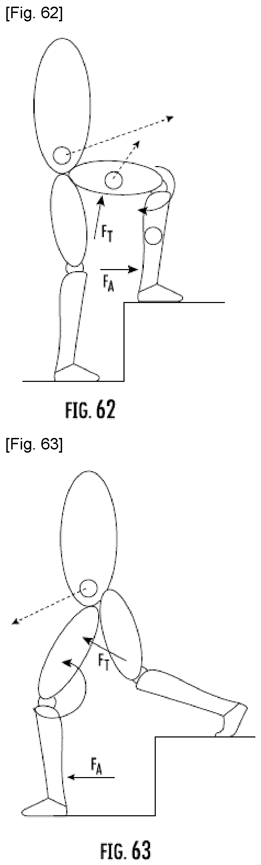

Figures 62 and 63 are force diagrams illustrating forces exerted upon a person's upper and lower legs by the above describe example exosuits. Figure 62 illustrates the thigh forces F_{T} and the lower leg or ankle forces F_{A} created by the powered actuator 1052, 1952 during stepping up. Figure 62 illustrates the thigh forces FT and the lower leg or ankle forces FA created by the powered actuator 1052, 1952 during stepping up. Similar forces may generated to assist in walking, running or other movements.

Although the present disclosure has been described with reference to example implementations, workers skilled in the art will recognize that changes may be made in form and detail without departing from the scope of the claimed subject matter. For example, although different example implementations may have been described as including features providing benefits, it is contemplated that the described features may be interchanged with one another or alternatively be combined with one another in the described example implementations or in other alternative implementations. Because the technology of the present disclosure is complex, not all changes in the technology are foreseeable. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. An exosuit leg gripping system comprising:
an upper leg grip (28, 328, 528, 1528) configured to encircle a thigh of a person wearing the exosuit leg gripping system;
a lower leg grip (32, 332, 532, 1532) configured to encircle a shank of a person wearing the exosuit leg gripping system;
**characterized in that**
the exosuit leg gripping system comprises an upper leg grip connection interface (80-1, 380, 580) carried by the upper leg grip (28, 328, 528, 1528), the upper leg grip connection interface (80-1, 380, 580) configured to releasably connect the upper leg grip (28, 328, 528, 1528) to a thigh link (54, 1054) of an exosuit drive system;
and **in that**
the exosuit leg gripping system comprises a lower leg grip connection interface (80-2, 380, 780) carried by the lower leg grip (32, 332, 532, 1532), a shank link connection interface (1150) configured to releasably connect the lower leg grip (32, 332, 532, 1532) to a shank link (56, 1056) of an exosuit drive system.

2. The exosuit leg gripping system of claim 1, wherein the lower leg grip connection interface (80-2, 380, 780) is configured to connect to the shank link (56, 1056) in response to movement of the shank link (56, 1056) in a direction parallel to and along an outer circumference of the lower leg grip.

3. The exosuit leg gripping system of claim 2, wherein the upper leg grip connection interface (80-1, 380, 580) is configured to connect to the thigh link (54, 1054) in response to movement of the thigh link (54, 1054) in a radial direction towards a center of the thigh link (54, 1054).

4. The exosuit leg gripping system of claim 1, wherein the upper leg grip connection interface (80-1, 380, 580) is configured to connect to the thigh link (54, 1054) in response to movement of the thigh link (54, 1054) in a radial direction towards a center of the thigh link (54, 1054).

5. The exosuit leg gripping system of claim 1, wherein the lower leg grip connection interface (80-2, 380, 780) comprises a resiliently flexible hook (844, 1152) configured to engage the shank link (1056).

6. The exosuit leg gripping system of claim 5 further comprising the shank link (1056), wherein the shank link (56, 1056) comprises a connection release (1106) movable to disengage the resiliently flexible hook (844, 1152) from the shank link (56, 1056).

7. The exosuit leg gripping system of claim 1, wherein the upper leg grip connection interface (80-1, 380, 580) comprises a window (1098) configured to receive a pair of oppositely directed resiliently biased hooks (1110) of the thigh link (54, 1054).

8. The exosuit leg gripping system of claim 7 further comprising the thigh link (54, 1054), wherein the thigh link (54, 1054) comprises:
the pair of oppositely directed resiliently biased hooks (1110) for engaging opposite edges of the window (1098); and
a pair of oppositely directed pushbuttons (1114) coupled to the pair of oppositely directed resiliently biased hooks (1110), the pair of obviously directed pushbuttons (1114) being movable towards one another to disengage the oppositely directed resiliently biased hooks (1110) from the opposite edges of the window (1098).

9. The exosuit leg gripping system of claim 1 further comprising an exosuit garment (24, 124,324, 524, 1324, 1424) having a waist opening (44, 544), a first leg opening (46-1, 546-1) and a second leg opening (46-2, 546-2), the exosuit garment (24, 124,324, 524, 1324, 1424) being connected to the upper leg grip (28, 328, 528, 1528) and the lower leg grip (32, 332, 532, 1532).

10. The exosuit leg gripping system of claim 9, wherein the exosuit garment (24, 124,324, 524, 1324, 1424) is releasably connected to the upper leg grip (28, 328, 528, 1528) and the lower leg grip (32, 332, 532, 1532).

11. The exosuit leg gripping system of claim 9, wherein the upper leg grip (28, 328, 528, 1528) and the lower leg grip (32, 332, 532, 1532) are within an interior of the exosuit garment (24, 124,324, 524, 1324, 1424).

12. The exosuit leg gripping system of claim 11, wherein the exosuit garment (24, 124,324, 524, 1324, 1424) comprises a first aperture (550) for accessing the thigh link connection interface (80-1, 380, 580) and a second aperture (650) for accessing the shank link connection interface (1150).

13. The exosuit leg gripping system of claim 11, wherein the upper leg grip (28, 328, 528, 1528) has upper leg grip constriction adjuster (642), wherein the lower leg grip (32, 332, 532, 1532) has lower leg grip constriction adjuster (732), and wherein the exosuit garment (24, 124,324, 524, 1324, 1424) further comprises a third aperture (551) for accessing a thigh link constriction adjuster and a fourth aperture (651) for accessing the shank link constriction adjuster.

14. The exosuit leg gripping system of claim 1 further comprising:
an ankle grip (534) to at least partially encircle a region proximate an ankle of the person wearing the exosuit leg gripping system; and
a post (764) extending between and interconnecting the ankle grip (534) and the lower leg grip (32, 332, 532, 1532).
